# EUROPEAN PATENT APPLICATION

(11) **EP 0 926 862 A2**
(43) Date of publication of application: **30.06.1999**
(21) Application number: 98310439.9
(22) Date of filing: 18.12.1998
(51) Int. Cl.: H04L 29/00

(54) **Software download system including a transmitting apparatus and a receiving apparatus**

(30) Priority: 26.12.1997 JP 36894097
(71) Applicant: MATSUSHITA ELECTRIC INDUSTRIAL CO., LTD., Kadoma-shi, Osaka 571-8501 (JP)
(72) Inventor: Karibe, Tomoyuki, Tokyo 166-0014 (JP); Suzuki, Takayuki, Tokyo 168-0062 (JP); Shinohara, Hiroki, Yokohama 244-0811 (JP)
(74) Representative: Senior, Alan Murray

(57) **Abstract**

A transmitting apparatus (500) transmits judgement information to a receiving apparatus (100). The receiving apparatus (100) compares the received judgement information with software information stored in the receiving apparatus to check whether the downloading is successful or unsuccessful. Furthermore, the receiving apparatus (100) checks whether the software is downloadable or not. When downloadable, the receiving apparatus (100) automatically executes the downloading of the software without any intervention by the user. When not downloadable, the receiving apparatus (100) causes a display apparatus (200) to display a message and notifies the downloading failure to the transmitting apparatus (500).

## Description

The present invention relates to a software download system based on a digital broadcasting service utilizing a communication or broadcasting satellite. More specifically, the present invention relates to a software download system capable of outputting a message on the screen of each receiving apparatus in response to failure in the downloading of software or capable of notifying the downloading failure from the receiving apparatus to a transmitting apparatus.

A conventional downloading system, such as "CS digital broadcasting standard shared receiver," ARIB STD-B16, enacted on October 7, 1997, 1.0 version, discloses a shared downloading system. Transmission data handled in the shared downloading system generally comprise both the download control section (DCT) and the download section (DLT). The DCT includes a manufacturer's ID and a machine type ID of the receiving apparatus compatible with the software to be downloaded as well as a version number of the software. The DLT includes the software itself. The receiving apparatus receives the DCT to determine the software to be downloaded prior to the downloading of the software, and then receives the DLT including the designated software.

According to the conventional ARIB shared downloading system, the receiving apparatus judges the necessity of downloading the software with reference to the DCT transmitted from the transmitting apparatus. However, there will be the possibility that the receiving apparatus may miss the DCT due to various reasons including power-off of the receiving apparatus. In such a case, it is impossible to appropriately judge the necessity of the downloading. Furthermore, only using the DCT and DLT is insufficient for detecting the failure in the downloading of the software. In other words, it was impossible to perform actual result management of the performed downloading.

The present invention provides a transmitting apparatus comprising a transmitting means for transmitting judgement information to a receiving apparatus, thereby causing the receiving apparatus to judge success/failure in the downloading of software based on the judgement information. With this arrangement, it becomes possible for the receiving apparatus to judge the success/failure in the downloading of software based on the judgement information transmitted from the transmitting apparatus.

The present invention can thereby manage the actual result of the downloading. To this end, a transmitting apparatus transmits judgement information to a receiving apparatus. The receiving apparatus compares the received judgement information with software information stored in the receiving apparatus to check whether the downloading is successful or unsuccessful. Furthermore, the receiving apparatus checks whether the software is downloadable or not. When downloadable, the receiving apparatus automatically executes the downloading of the software without any intervention by the user. When not downloadable, the receiving apparatus causes a display apparatus to display a message and notifies the downloading failure to the transmitting apparatus.

Preferably, in this transmitting apparatus, the transmitting means is for transmitting a processing identifier for designating processing executed when the receiving apparatus failed in the downloading of the software. With this arrangement, the receiving apparatus can execute the predetermined processing when the receiving apparatus failed in the downloading of the software.

Preferably, in this transmitting apparatus, the processing identifier is a software name, so that the receiving apparatus can identify the processing to be executed with reference to the software name.

Preferably, in this transmitting apparatus, the judgement information includes a version number of the software and transmitting schedule information including start time and end time of the software. With this arrangement, the receiving apparatus can judge the success/failure in the downloading of the software based on the version number of the software and the transmission schedule information including the start time and the end time of the software.

Another aspect of the present invention provides a receiving apparatus comprising a receiving means for receiving judgement information used for judging success/failure in the downloading of software stored in the receiving apparatus, a success/failure judging means for judging whether the receiving apparatus succeeded or failed in the downloading of software with reference to the judgement information received by the receiving means, and a notifying means for notifying downloading success/failure to the outside of the receiving apparatus. With this arrangement, it becomes possible to notify the download result to the outside of the receiving apparatus.

Preferably, in this receiving apparatus, the notifying means is for causing the display means to display information indicating the success/failure in the downloading. With this arrangement, it becomes possible to display the download result on the screen of the display apparatus.

Preferably, in this receiving apparatus, the notifying means is for sending download success/failure information to the transmitting apparatus, the download success/failure information including a software name relating to the success/failure in the downloading. With this arrangement, the receiving apparatus can send the download success/failure information including the software name to the transmitting apparatus.

Preferably, in this receiving apparatus, the notifying means is for sending download success/failure information to the transmitting apparatus, the download success/failure information including a receiving apparatus identifier. With this arrangement, the receiving apparatus can send the download success/failure information including the receiving apparatus identifier to the transmitting apparatus.

Another aspect of the present invention provides a receiving apparatus comprising a receiving means for receiving judgement information used for judging success/failure in the downloading of software stored in the receiving apparatus and for receiving a processing identifier designating processing executed when the receiving apparatus failed in the downloading of the software, a success/failure judging means for judging whether the receiving apparatus succeeded or failed in the downloading of the software with reference to the judgement information received by the receiving means, and a processing executing means for executing the designated processing corresponding to the processing identifier when the downloading failure is detected by the success/failure judging means. With this arrangement, the receiving apparatus can execute the designated processing with reference to the processing identifier when the downloading failure is detected by the success/failure judging means.

Preferably, in this receiving apparatus, the judgement information includes the version number of the software and transmission schedule information including the start time and the end time of the software. With this arrangement, the receiving apparatus can judge the success/failure in the downloading of the software based on the version number of the software and the transmission schedule information including the start time and the end time of the software.

Another aspect of the present invention provides a receiving apparatus comprising a time slot information managing means for managing time slot information including start date/time and end date/time, a schedule judging means for judging whether there is any download broadcasting having broadcasting schedule meeting the time slot managed by the time slot information managing means, and a download executing means for executing the downloading of software from the download broadcasting when the schedule judging means confirms the presence of a satisfactory download broadcasting. With this arrangement, the receiving apparatus can execute the downloading of the software from the download broadcasting when any satisfactory download broadcasting is present.

Preferably, this receiving apparatus further comprises the notifying means for notifying downloading success/failure to the outside of the receiving apparatus when the schedule judging means confirms the absence of any satisfactory download broadcasting. With this arrangement, it becomes possible to notify the download result to the outside of the receiving apparatus.

Preferably, in this receiving apparatus, the notifying means is for causing the display means to display information indicating the success/failure in the downloading. With this arrangement, it becomes possible to display the download result on the screen of the display apparatus.

Preferably, in this receiving apparatus, the notifying means is for sending download success/failure information to the transmitting apparatus, the download success/failure information including the software name relating to the success/failure in the downloading. With this arrangement, the receiving apparatus can send the download success/failure information including the software name to the transmitting apparatus.

Preferably, in this receiving apparatus, the notifying means is for sending download success/failure information to the transmitting apparatus, the download success/failure information including the receiving apparatus identifier. With this arrangement, the receiving apparatus can send the download success/failure information including the receiving apparatus identifier to the transmitting apparatus.

Preferably, in the transmitting apparatus, the transmitting means transmits a necessary time required for the receiving apparatus to download the software from a download broadcasting. With this arrangement, the receiving apparatus can receive the necessary time required for the receiving apparatus to download the software from the download broadcasting.

Another aspect of the present invention provides a receiving apparatus comprising a maximum interrupt time managing means for managing a maximum interrupt time for downloading software which represents an allowable maximum interruption of program viewing, a schedule judging means for judging whether there is any download broadcasting having a necessary download time equal to or smaller than the maximum interrupt time managed by the maximum interrupt time managing means, and a download executing means for executing the downloading of the software from the download broadcasting when the schedule judging means confirms the presence of a satisfactory download broadcasting. With this arrangement, the receiving apparatus can execute the downloading of the software from the download broadcasting when the schedule judging means confirms the presence of the satisfactory download broadcasting.

Preferably, this receiving apparatus further comprises the notifying means for notifying downloading success/failure to the outside of the receiving apparatus when the schedule judging means confirms the absence of any satisfactory download broadcasting. With this arrangement, it becomes possible to notify the download result to the outside of the receiving apparatus.

Preferably, in this receiving apparatus, the notifying means is for causing the display means to display information indicating the success/failure in the downloading. With this arrangement, it becomes possible to display the download result on the screen of the display apparatus.

Preferably, in this receiving apparatus, the notifying means is for sending download success/failure information to the transmitting apparatus, the download success/failure information including the software name relating to the success/failure in the downloading. With this arrangement, the receiving apparatus can send the download success/failure information including the software name to the transmitting apparatus.

Preferably, in this receiving apparatus, the notifying means is for sending download success/failure information to the transmitting apparatus, the download success/failure information including the receiving apparatus identifier. With this arrangement, the receiving apparatus can send the download success/failure information including the receiving apparatus identifier to the transmitting apparatus.

Preferably, in the transmitting apparatus, the transmitting means transmits final broadcasting date/time of a download broadcasting. With this arrangement, the receiving apparatus can receive the final broadcasting date/time of the download broadcasting.

Another aspect of the present invention provides a receiving apparatus comprising a final broadcasting date/time flag managing means for managing a final broadcasting date/time flag, the final broadcasting date/time flag indicating decision of enforced downloading which forcibly downloads software from a download broadcasting without missing the chance for receiving the download broadcasting, a final broadcasting date/time judging means for judging whether the final broadcasting date/time flag indicates the execution of the enforced downloading and whether the final chance for receiving the download broadcasting comes, and a download executing means for executing the downloading of the software from the download broadcasting when the final broadcasting date/time judging means confirms that the final broadcasting date/time flag indicates the execution of the enforced downloading and the present download broadcasting is the final chance for downloading the software. With this arrangement, the receiving apparatus can execute the downloading of the software from the download broadcasting when the user requests the execution of the enforced downloading and the present download broadcasting is the final chance for downloading the software.

Preferably, this receiving apparatus further comprises the notifying means for notifying downloading success/failure to the outside of the receiving apparatus when the download executing means failed in downloading the software in the final chance for receiving the download broadcasting. With this arrangement, it becomes possible to notify the download result to the outside of the receiving apparatus.

Preferably, in this receiving apparatus, the notifying means is for causing the display means to display information indicating the success/failure in the downloading. With this arrangement, it becomes possible to display the download result on the screen of the display apparatus.

Preferably, in this receiving apparatus, the notifying means is for sending download success/failure information to the transmitting apparatus, the download success/failure information including the software name relating to the success/failure in the downloading. With this arrangement, the receiving apparatus can send the download success/failure information including the software name to the transmitting apparatus.

Preferably, in this receiving apparatus, the notifying means is for sending download success/failure information to the transmitting apparatus, the download success/failure information including the receiving apparatus identifier. With this arrangement, the receiving apparatus can send the download success/failure information including the receiving apparatus identifier to the transmitting apparatus.

Another aspect of the present invention provides a receiving apparatus comprising an enforced download flag managing means for managing an enforced downloading flag, the enforced downloading flag indicating forcible execution of downloading of software from a download broadcasting, an enforced download judging means for judging whether the enforced downloading flag indicates the forcible execution of the software downloading from the download broadcasting, and a download executing means for executing the downloading of the software from the download broadcasting when the enforced download judging means confirms that the enforced downloading flag indicates the forcible execution of the software downloading from the download broadcasting. With this arrangement, the receiving apparatus can execute the downloading of the software from the download broadcasting when the user requests the forcible execution of the software downloading from the download broadcasting.

Preferably, the transmitting apparatus further comprises a receiving apparatus managing means for managing both time slot information and receiving apparatus counting information, the receiving apparatus count information including the total number of receiving apparatuses having succeeded/failed in a time slot designated by start date/time and end date/time described in the time slot information, and a schedule determining means for determining a schedule of a download broadcasting with reference to the receiving apparatus count information, so that the download broadcasting can be received by a large number of receiving apparatuses. With this arrangement, the receiving apparatus can select a preferable time slot in determining the schedule of the download broadcasting.

Another aspect of the present invention provides a receiving apparatus comprising an executed download recording/managing means for recording and managing executed download information including date/time of success/failure in the downloading, and a notifying means for notifying the executed download information to the outside of the receiving apparatus. With this arrangement, the receiving apparatus can notify the executed download information to the outside of the receiving apparatus.

Preferably, in this receiving apparatus, the notifying means is for causing the display means to display information indicating the success/failure in the downloading.

Preferably, in this receiving apparatus, the notifying means is for sending download success/failure information to the transmitting apparatus, the download success/failure information including the software name relating to the success/failure in the downloading. With this arrangement, the receiving apparatus can send the download success/failure information including the software name to the transmitting apparatus.

Preferably, in this receiving apparatus, the notifying means is for sending download success/failure information to the transmitting apparatus, the download success/failure information including the receiving apparatus identifier. With this arrangement, the receiving apparatus can send the download success/failure information including the receiving apparatus identifier to the transmitting apparatus.

Another aspect of the present invention provides a receiving apparatus comprising a viewing condition managing means for managing user's viewing information represented by activation or deactivation of the receiving apparatus, a viewing condition judging means for checking whether the receiving apparatus is in an activated condition or in a deactivated condition based on the user's viewing information managed by the viewing condition managing means, and a download executing means for executing a downloading of software only when the viewing condition judging means confirms that the receiving apparatus is in the deactivated condition. With this arrangement, the receiving apparatus can execute the downloading only when the user does not use the receiving apparatus for viewing an ordinary program.

Another aspect of the present invention provides a receiving apparatus comprising a viewing condition managing means for managing user's viewing information represented by activation or deactivation of the receiving apparatus, a download schedule judging means for checking whether any download broadcasting is present, and a download executing means for executing a downloading of software only when the receiving apparatus is in a deactivated condition and the download broadcasting is present. With this arrangement, the downloading of the software is executed only when the receiving apparatus is in the deactivated condition and the download broadcasting is present.

Preferably, the transmitting apparatus further comprises a receiving apparatus managing means for managing both time slot information and receiving apparatus counting information, the receiving apparatus count information including the total number of activated or deactivated receiving apparatuses in a time slot designated by start date/time and end date/time described in the time slot information, and a schedule determining means for determining a schedule of a download broadcasting with reference to the receiving apparatus count information, so that the download broadcasting can be received by a large number of receiving apparatuses. With this arrangement, the receiving apparatus can select a preferable time slot in determining the schedule of the download broadcasting.

Another aspect of the present invention provides a receiving apparatus comprising a power source condition managing means for managing both power source information representing a present power on-off condition of a power source and power source change information including latest power on-off date/time, and a notifying means for sending the power source change information to a transmitting apparatus. With this arrangement, the receiving apparatus can send the power source change information to the transmitting apparatus.

The above and other features and advantages of the present invention will become more apparent from the following detailed description of exemplary embodiments and the accompanying drawings, in which:
Fig. 1 is a block diagram showing a software download system (disclosing a transmitting apparatus and a receiving apparatus) in accordance with a first embodiment of the present invention;
Fig. 2 is a view showing a software management table used in the transmitting apparatus in accordance with the first embodiment of the present invention;
Fig. 3 is a view showing a software information table used in the transmitting apparatus in accordance with the first embodiment of the present invention;
Fig. 4 is a view showing a download table used in the transmitting apparatus in accordance with the first embodiment of the present invention;
Fig. 5 is a view showing a software management table (before revision) used in the receiving apparatus in accordance with the first embodiment of the present invention;
Fig. 6 is a view showing a software information table used in the receiving apparatus in accordance with the first embodiment of the present invention;
Fig. 7 is a view showing a download entry used in the receiving apparatus in accordance with the first embodiment of the present invention;
Fig. 8 is a view showing a software information entry used in the receiving apparatus in accordance with the first embodiment of the present invention;
Fig. 9 is a view showing software name, version and software size of a downloaded program in the receiving apparatus in accordance with the first embodiment of the present invention;
Fig. 10 is a view showing a software management table (after revision) used in the receiving apparatus in accordance with the first embodiment of the present invention;
Fig. 11 is a view showing a screen display used in response to the failure in the downloading;
Fig. 12 is a block diagram showing a software download system (disclosing a transmitting apparatus and a receiving apparatus) in accordance with a second embodiment of the present invention;
Fig. 13 is a view showing receiving apparatus identifying information used in the receiving apparatus in accordance with the second embodiment of the present invention;
Fig. 14 is a view showing actual download information used in the transmitting apparatus and the receiving apparatus in accordance with the second embodiment of the present invention;
Fig. 15 is a view showing an actual download result management table (before revision) used in the transmitting apparatus in accordance with the second embodiment of the present invention;
Fig. 16 is a view showing the actual download result management table (after revision) used in the transmitting apparatus in accordance with the second embodiment of the present invention;
Fig. 17 is a block diagram showing a software download system (disclosing a transmitting apparatus and a receiving apparatus) in accordance with a third embodiment of the present invention;
Fig. 18 is a view showing an optional processing management table used in the transmitting apparatus and the receiving apparatus in accordance with the third embodiment of the present invention;
Fig. 19 is a view showing a software management table used in the transmitting apparatus in accordance with the third embodiment of the present invention;
Fig. 20 is a view showing a software information table used in the transmitting apparatus and the receiving apparatus in accordance with the third embodiment of the present invention;
Fig. 21 is a view showing a download table used in the receiving apparatus in accordance with the third embodiment of the present invention;
Fig. 22 is a view showing a software management table used in the receiving apparatus in accordance with the third embodiment of the present invention;
Fig. 23 is a view showing a software information table used in the receiving apparatus in accordance with the third embodiment of the present invention;
Fig. 24 is a view showing a download entry used in the receiving apparatus in accordance with the third embodiment of the present invention;
Fig. 25 is a view showing a software information entry used in the receiving apparatus in accordance with the third embodiment of the present invention;
Fig. 26 is a block diagram showing a software download system (omitting a transmitting apparatus and disclosing only a receiving apparatus) in accordance with forth to sixth embodiments of the present invention;
Fig. 27 is a view showing a user setting screen displayed through the display apparatus in accordance with the forth embodiment of the present invention;
Fig. 28 is a view showing download time slot information displayed through the display apparatus in accordance with the forth embodiment of the present invention;
Fig. 29 is a view showing a download table used in the transmitting apparatus in accordance with the fourth embodiment of the present invention;
Fig. 30 is a view showing a download schedule table used in the receiving apparatus in accordance with the fourth embodiment of the present invention;
Fig. 31 is a view showing a schedule entry used in the receiving apparatus in accordance with the fourth embodiment of the present invention;
Fig. 32 is a view showing a download table used in the receiving apparatus in accordance with the fifth embodiment of the present invention;
Fig. 33 is a view showing a user setting screen displayed through the display apparatus in accordance with the fifth embodiment of the present invention;
Fig. 34 is a view showing maximum interrupt time information displayed through the display apparatus in accordance with the fifth embodiment of the present invention;
Fig. 35 is a view showing a download schedule table used in the receiving apparatus in accordance with the fifth embodiment of the present invention;
Fig. 36 is a view showing an entry including an average required time used in the receiving apparatus in accordance with the fifth embodiment of the present invention;
Fig. 37 is a view showing a user setting screen displayed through the display apparatus in accordance with the sixth embodiment of the present invention;
Fig. 38 is a view showing download time slot information and enforced download flag displayed through the display apparatus in accordance with the sixth embodiment of the present invention;
Fig. 39 is a view showing a download table used in the receiving apparatus in accordance with the sixth embodiment of the present invention;
Fig. 40 is a view showing a download schedule table used in the receiving apparatus in accordance with the sixth embodiment of the present invention;
Fig. 41 is a flowchart showing a schedule determining procedure performed in the receiving apparatus in accordance with the sixth embodiment of the present invention;
Fig. 42 is a view showing a schedule entry used in the receiving apparatus in accordance with the sixth embodiment of the present invention;
Fig. 43 is a block diagram showing a software download system (disclosing a transmitting apparatus and a receiving apparatus) in accordance with a seventh embodiment of the present invention;
Fig. 44 is a view showing a download table used in the transmitting apparatus in accordance with the seventh embodiment of the present invention;
Fig. 45 is a view showing receiving time information used in the receiving apparatus in accordance with the seventh embodiment of the present invention;
Fig. 46 is a view showing returning information transmitted from the receiving apparatus to the transmitting apparatus in accordance with the seventh embodiment of the present invention;
Fig. 47 is a view showing a receiving apparatus management table used in the receiving apparatus in accordance with the seventh embodiment of the present invention;
Fig. 48 is a view showing an actual download result management table used in the receiving apparatus in accordance with the seventh embodiment of the present invention;
Fig. 49 is a block diagram showing a software download system (omitting a transmitting apparatus and disclosing only a receiving apparatus) in accordance with an eighth embodiment of the present invention;
Fig. 50 is a view showing a download table used in the transmitting apparatus in accordance with the eighth embodiment of the present invention;
Fig. 51 is a flowchart showing a download judging procedure performed in the receiving apparatus in accordance with the eighth embodiment of the present invention;
Fig. 52 is a block diagram showing a software download system (disclosing a transmitting apparatus and a receiving apparatus) in accordance with a ninth embodiment of the present invention;
Fig. 53 is a table showing power source conditions managed in the receiving apparatus in accordance with the ninth embodiment of the present invention;
Fig. 54 is a table showing information returned from the receiving apparatus to the transmitting apparatus in accordance with the ninth embodiment of the present invention;
Fig. 55 is a table showing receiving apparatus power source conditions recorded in the transmitting apparatus in accordance with the ninth embodiment of the present invention; and
Fig. 56 is a view showing a deactivated receiving apparatus count table used in the transmitting apparatus in accordance with the ninth embodiment of the present invention.

### First Embodiment

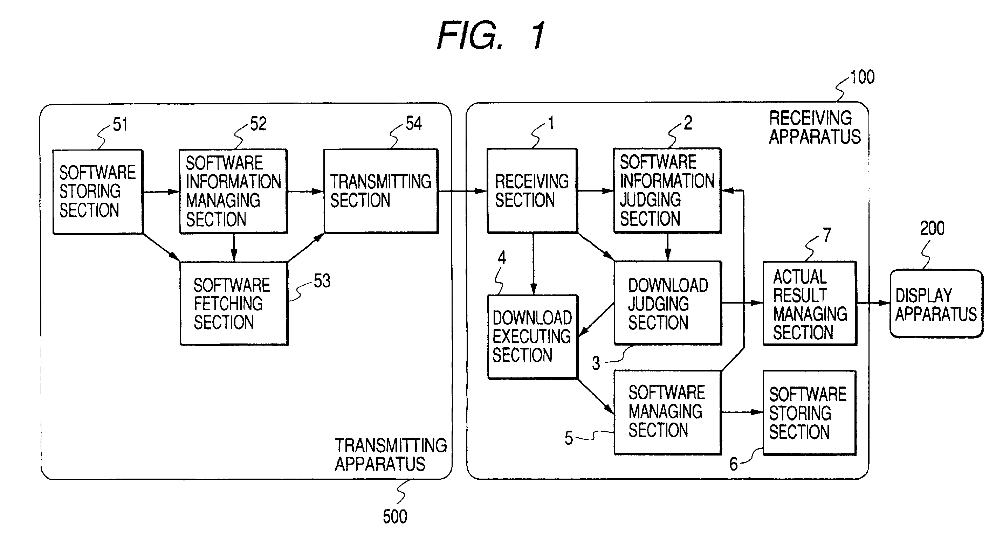

Fig. 1 is a block diagram showing a software download system in accordance with a first embodiment of the present invention. The software download system consists of a transmitting apparatus 500 and a receiving apparatus 100 (associated with a display apparatus 200). The transmitting apparatus 500 comprises a software storing section 51 storing the software to be downloaded. A software information managing section 52 manages a software management table and produces a software information table based on the software management table. The produced software information table is sent to a transmitting section 54. Furthermore, the software information managing section 52 manages a download table and sends the download table to a software fetching section 53 and to the transmitting section 54. The software fetching section 53 reads designated software from the software storing section 51 based on the information described in the download table sent from the software information managing section 52. The transmitting section 54 receives the software sent from the software fetching section 53 together with the software information table and the download table sent from the software information managing section 52. The transmitting section 54 broadcasts the software, the software information table, and the download table to the receiving apparatus 100.

The receiving apparatus 100 comprises a software storing section 6 storing the software. A software managing section 5 manages the software and related software information stored in the software storing section 6. A receiving section 1, receiving the software, the software information table, and the download table transmitted from the transmitting apparatus 500, sends the received software information table to a software information judging section 2, sends the received download table to a download judging section 3, and sends the received software to a download executing section 4. The software information judging section 2 renews the received software information table through software information judging processing performed with reference to a software managing table managed by the software managing section 5. The renewed software information table is sent to the download judging section 3. The download judging section 3 performs download judging processing with reference to the software information table sent from the software information judging section 2 and the download table sent from the receiving section 1. The download judging section 3 sends an entry of the download table consisting of downloadable software to the download executing section 4. Meanwhile, the download judging section 3 sends an entry of the software information table consisting of non-downloadable software to an actual result managing section 7. The download executing section 4 downloads the software described in the entry of the download table sent from the download judging section 3. The download executing section 4 sends the downloaded result to the software managing section 5. When there is any failure in the downloading of the software, the actual result managing section 7 outputs information notifying the downloading failure on a screen of the display apparatus 200.

The above-described software download system of the first embodiment operates in the following manner.

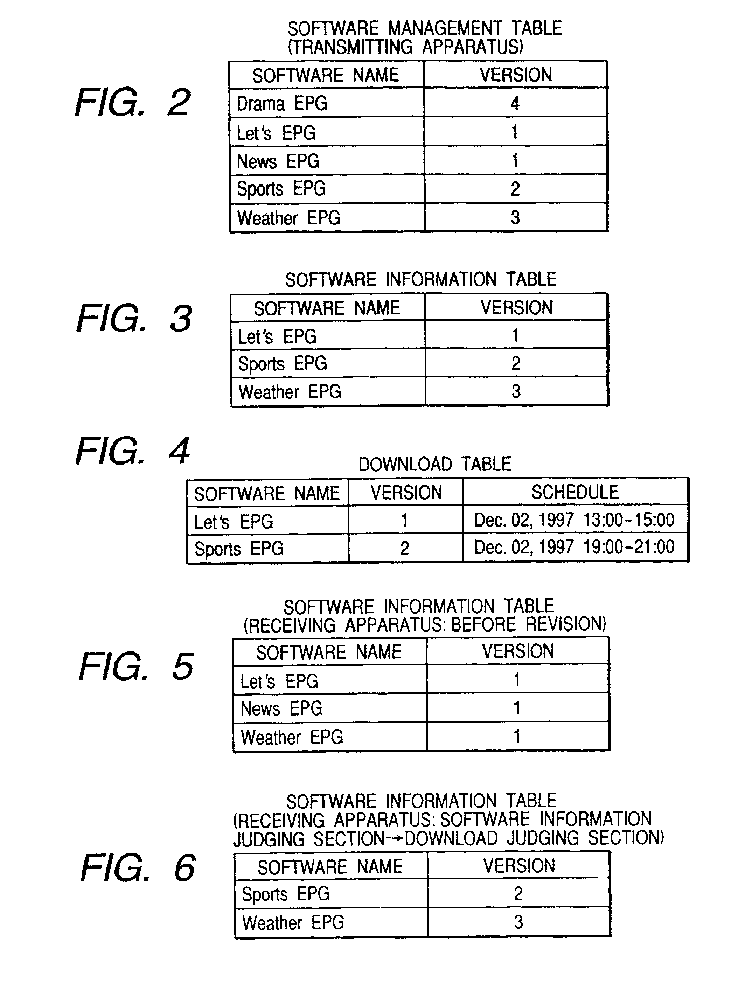

In the transmitting apparatus 500, the software information managing section 52 manages the software management table (shown in Fig. 2) describing software name and related software information of each software to be downloaded. According to this embodiment, the related software information is the version of the software indicating newness (i.e., history of revision). The version of the software is represented by numeral. The version number is incremented by 1 in response to each revision of the software. According to the example shown in Fig. 2, the software management table registers five types of software. For example, it is understood that the program "Let's EPG" has the version number "1."

The software information managing section 52 produces the software information table (Fig. 3) with reference to the software management table (Fig. 2). According to the example shown in Fig. 3, the software information table includes three types of software selected from the software management table.

The software fetching section 53 sends the software information table to the transmitting section 54 so that the transmitting section 54 can transmit the software information to the receiving apparatus 100. Thus, the receiving apparatus 100 can recognize the present version of the software.

The total number of the software types selectable from the software management table is arbitrary, although the above-described software information table (Fig. 3) includes three.

The software information managing section 52 manages the download table (Fig. 4) describing the data of the software downloadable by the receiving apparatus 100. According to the example shown in Fig. 4, the download table registers two programs "Let's EPG" and "Sports EPG." The download table (Fig. 4) describes software name, version, and broadcasting schedule for each software. The broadcasting schedule includes the date, start time and end time. According to the example shown in Fig. 4, the program "Sports EPG" has the version number "2" and the broadcasting schedule "December 2, 1997, from 19:00 to 21:00."

As described above, according to the first embodiment, the software information managing section 52 of the transmitting apparatus 500 produces both the software information table (Fig. 3) and the download table (Fig. 4) which are used in detecting any downloading failure in the receiving apparatus 100.

The software fetching section 53 fetches the software registered in the download table (Fig. 4) sent from the software information managing section 52. More specifically, the software fetching section 53 reads each designated software out of the software storing section 51 based on the schedule (date and time) described in the download table, and sends the readout software to the transmitting section 54. For example, the program "Sports EPG", version 2, shown in Fig. 4, is fetched from the software storing section 51 so that the broadcasting of this software starts on time (i.e., 19:00 on Dec. 2, 1997). The readout software is continuously sent to the transmitting section 54 until the scheduled end time (i.e., 21:00 on Dec. 2, 1997) comes.

The transmitting section 54 broadcasts the software information table (Fig. 3) and the download table (Fig. 4) sent from the software information managing section 52 to the receiving apparatus 100. At the same time, the transmitting section 54 broadcasts the software sent from the software fetching section 53 to the receiving apparatus 100.

Details of the protocol used in the transmission of the software information table (Fig. 3) and the download table (Fig. 4) together with the software is not related to the present invention and therefore will not be explained.

In the receiving apparatus 100, the receiving section 1 receives the software information table (Fig. 3), the download table (Fig. 4) and the software itself broadcasted from the transmitting section 54 of the transmitting section 500. The receiving section 1 sends the received software information table (Fig. 3) to the software information judging section 2, sends the received download table (Fig. 4) to the download judging section 3, and sends the received software to the download executing section 4.

The software managing section 5 manages a software management table (Fig. 5) which describes software name and related software information of each software stored in the software storing section 6. According to the example of the software management table shown in Fig. 5, the related software information is the version of the software. The information described in the software management table (shown in Fig. 5) basically agrees with the information in the software management table (Fig. 2) managed by the software information managing section 52 of the transmitting apparatus 500. It is understood from the software management table shown in Fig. 5 that the software storing section 6 stores three programs "Let's EPG", "News EPG" and "Weather EPG" each having the version number 1.

The software information judging section 2 determines the software to be downloaded with reference to the software information table sent from the receiving section 1 and the software management table managed by the software managing section 5. According to the first embodiment, the receiving section 1 receives the software information table shown in Fig. 2 produced by the software information managing section 52 of the transmitting apparatus 500. The software information judging section 2, receiving the software information table from the receiving section 1, executes the software information judging processing with reference to the software management table (Fig. 5) managed by the software managing section 5.

First, in the software information judging processing, the software information judging section 2 selects the program "Let's EPG" from the software information table shown in Fig. 3. Then, the software information judging section 2 checks whether there is any software having the same name on the software management table shown in Fig. 5. As a result of check, it is confirmed that the software management table shown in Fig. 5 includes the same software name "Let's EPG." Then, the software information judging section 2 compares the versions of the agreed programs "Let's EPG" with reference to the software information table and the software management table. The program "Let's EPG" is version 1 in the software information table ( Fig. 3) and version 1 in the software management table (Fig. 5). Thus, agreement is confirmed between the versions of the compared programs having the same name "Let's EPG." In other words, the software information, i.e., software content, relating to the compared programs "Let's EPG" is completely identical between the transmitting apparatus and the receiving apparatus. Thus, the software information judging section 2 concludes that no downloading of the program "Let's EPG" is necessary. Based on this judgement, the entry of the program "Let's EPG" is erased from the software information table. As a result, the software information table shown in Fig. 3 is replaced by a renewed software information table shown in Fig. 6.

Then, in the software information judging processing, the software information judging section 2 selects the next program "Sports EPG" from the software information table shown in Fig. 6. Then, the software information judging section 2 checks whether there is any software having the same name on the software management table shown in Fig. 5. As a result of check, it is confirmed that the software management table shown in Fig. 5 includes the same software name "Sports EPG." Then, the software information judging section 2 compares the versions of the agreed programs having the same name "Sports EPG." In this case, the program "Sports EPG" is version 2 in the software information table (Fig. 6) and version 1 in the software management table (Fig. 5). Thus, disagreement is found between the versions of the compared programs having the same name "Sports EPG." The software information, i.e., software content, relating to the compared programs "Sports EPG" is not identical between the transmitting apparatus and the receiving apparatus. The software information judging section 2 concludes that downloading of this program "Sports EPG" is necessary to renew or revise the software in the receiving apparatus. Based on this judgement, the entry of the program "Sports EPG" is left in the software information table.

In the same manner, the software information judging section 2 selects the next program "Weather EPG" from the software information table shown in Fig. 6. Then, the software information judging section 2 checks whether there is any software having the same name on the software management table shown in Fig. 5. As a result of check, it is confirmed that the software management table shown in Fig. 5 includes the same software name "Weather EPG." Then, the software information judging section 2 compares the versions of the agreed programs "Weather EPG." In this case, the program "Weather EPG" is version 3 in the software information table (Fig. 6) and version 1 in the software management table (Fig. 5). Thus, disagreement is found between the versions of the compared programs having the same name "Weather EPG." The software information, i.e., software content, relating to the compared programs "Weather EPG" is not identical between the transmitting apparatus and the receiving apparatus. The software information judging section 2 concludes that downloading of this program "Weather EPG" is necessary to renew or revise the software in the receiving apparatus. Based on this judgement, the entry of the program "Weather EPG" is left in the software information table.

As described above, the software information judging section 2 performs the software information judging processing for all of the software registered in the software information table, and obtains a renewed or revised software information table consisting of only the programs whose downloading is judged to be necessary according to the software information judging processing. Next, the software information judging section 2 sends the renewed software information table to the download judging section 3.

The download judging section 3 manages the download table shown in Fig. 4 sent from the receiving section 1. The download judging section 3 starts the download judging processing upon receiving the software information table shown in Fig. 6 from the software information judging section 2. The download judging processing is performed in the following manner.

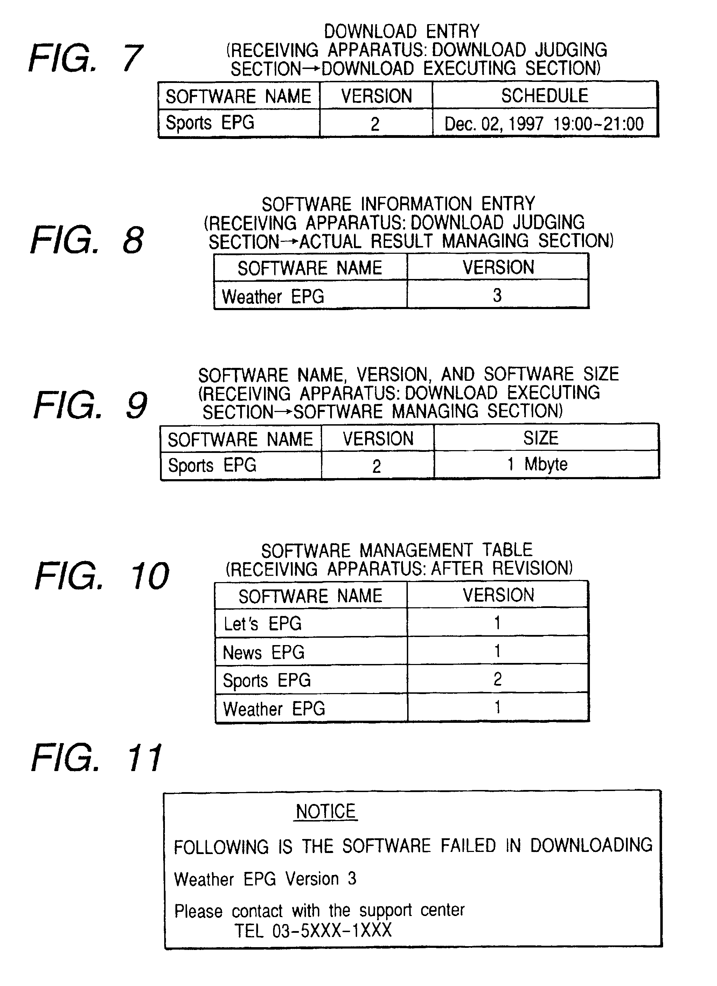

First, in the download judging processing, the download judging section 3 selects the program "Sports EPG" from the software information table shown in Fig. 6. Then, the download judging section 3 checks whether there is any software having the same name on the download table shown in Fig. 4. As a result of check, it is confirmed that the download table shown in Fig. 4 includes the same software name "Sports EPG." In this case, the download judging section 3 concludes that the receiving apparatus 100 can download the program "Sports EPG." The download judging section 3 produces the entry (Fig. 7) of the program "Sports EPG." from the download table, and sends this entry to the download executing section 4.

Then, in the download judging processing, the download judging section 3 selects the next program "Weather EPG" from the software information table shown in Fig. 6. Then, the download judging section 3 checks whether there is any software having the same name on the download table shown in Fig. 4. As a result of check, it is confirmed that the download table shown in Fig. 4 does not include the same software name "Weather EPG." In this case, the download judging section 3 concludes that the receiving apparatus 100 cannot download the program "Weather EPG." In other words, it is confirmed that the receiving apparatus 100 has failed in the downloading of the program "Weather EPG." The download judging section 3 produces the entry (Fig. 8) of the program "Weather EPG." from the software information table, and sends this entry to the actual result managing section 7.

As described above, the download judging section 3 performs the download judging processing for all of the software registered in the software information table sent from the software information judging section 2. The download judging section 3 sends the download entry (Fig. 7) registering only the downloadable software to the download executing section 4 and sends the software information entry (Fig. 8) registering only the non-downloadable (download failed) software to the actual result managing section 7.

The download executing section 4 accesses the software sent from the receiving section 1 to download the program having the same name and same version described in the download entry shown in Fig. 7 when this download entry is received from the download judging section 3. In this embodiment, downloading of the broadcasted software is completed in accordance with the schedule described in the download entry. After completing the downloading of the designated software, the download executing section 4 sends the program information including software name, version and software size in addition to the downloaded program itself to the software managing section 5. Fig. 9 shows details of the software name, the version and the software size sent to the software managing section 5.

The software managing section 5 manages the software managing table and checks whether there is any registered software agrees with the software received from the download executing section 4. When the software received from the download executing section 4 is already registered in the software managing table, the registered version of this software is renewed so as to agree with the version sent from the download executing section 4. Then, the software is sent from the software managing section 5 to the software storing section 6 and stored in this software storing section 6.

When the software received from the download executing section 4 is not registered in the software managing table, the software managing section 5 produces a new entry in the software management table to describe the software name and the version of the software received from the download executing section 4. The software is sent from the software managing section 5 to the software storing section 6 and stored in this software storing section 6.

The software management table, managed by the software managing section 5, does not include the same software name when the download executing section 4 sends the software name, the version and the software size shown in Fig. 9. Thus, the software managing section 5 produces a new entry in the software management table to describe the software name and the version of the software shown in Fig. 9, thereby renewing or revising the software management table as shown in Fig. 10.

The actual result managing section 7 receives the software information entry shown in Fig. 8 sent from the download judging section 3 and outputs the software name and the version of the notified non-downloaded (download failed) program to the display apparatus 200 which displays a screen image shown in Fig. 11. Accordingly, the user of the receiving apparatus 100 can know the software name and the version of the non-downloaded (download failed) program through the notice displayed on the display apparatus 200. The user can contact with the support center (not shown) or take an appropriate step to solve the problem based on this notice.

As apparent from the foregoing description, when the receiving apparatus 100 receives the software information table, the software information judging section 2 compares the software described in the received software information table with the content of the software in the receiving apparatus 100. Thus, it becomes possible to judge the necessity of downloading the software between the transmitting apparatus and the receiving apparatus, thereby determining the software to be downloaded. Furthermore, the download judging section 3 checks whether the software designated by the software information judging section 2 is downloadable or not. When the software is not downloadable, it is judged that the downloading of the software is unsuccessful. When the software is downloadable, the receiving apparatus starts the downloading of the software automatically without requiring any intervention by the user. Thus, it becomes possible to renew and add the software in the receiving apparatus.

More specifically, the first embodiment discloses a transmitting apparatus (500) comprising a transmitting means (54) for transmitting judgement information to a receiving apparatus (100), thereby causing the receiving apparatus to judge success/failure in the downloading of software based on the judgement information. The judgement information includes a version number of the software and transmission schedule information including start time and end time of the software (Fig. 4). Furthermore, the first embodiment discloses a receiving apparatus (100) comprising a receiving means (1) for receiving judgement information used for judging success/failure in the downloading of software stored in the receiving apparatus (100), a success/failure judging means (3) for judging whether the receiving apparatus (100) succeeded or failed in the downloading of software with reference to the judgement information received by the receiving means (1), and notifying means (7) for notifying downloading success/failure to the outside of the receiving apparatus. The notifying means (7) is for causing a display means (200) to display information indicating the success/failure in the downloading (Fig. 11).

### Second Embodiment

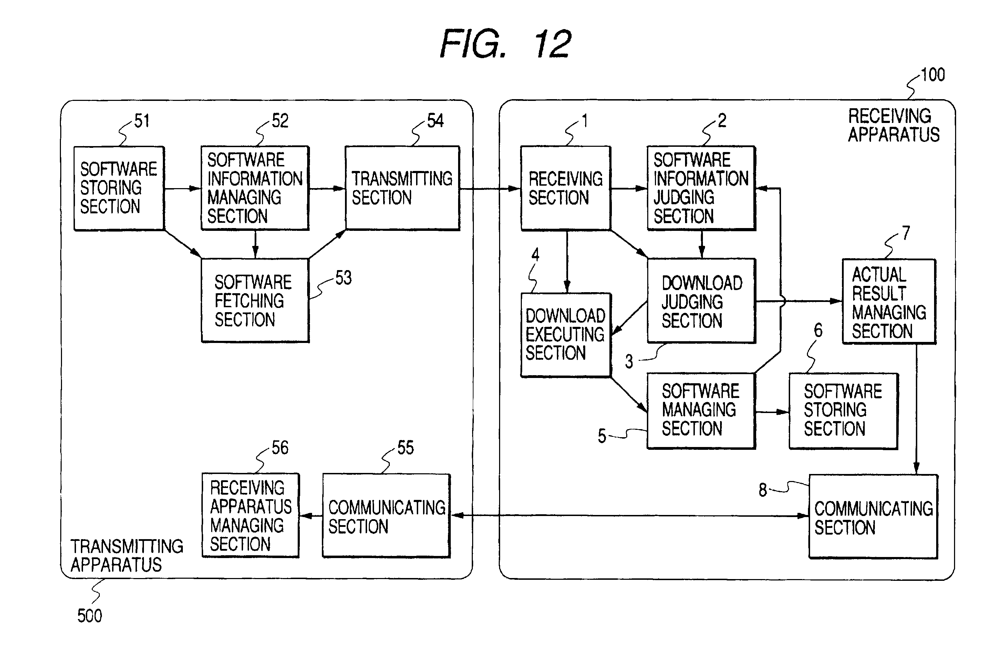

Fig. 12 is a block diagram showing a software download system in accordance with a second embodiment of the present invention. The software download system consists of a transmitting apparatus 500 and a receiving apparatus 100. The transmitting apparatus 500 comprises a receiving apparatus managing section 56 and a communicating section 55 in addition to the arrangement shown in the first embodiment. The receiving apparatus managing section 56 manages the information relating to the download failure which is sent from the receiving apparatus 100 via a communication path established by the communicating section 55.

The receiving apparatus 100 of the second embodiment differs from that of the first embodiment in that the actual result managing section 7 notifies the non-downloaded (download failed) software to the transmitting apparatus 500 via a communication path established by the communicating section 8.

The above-described software download system of the second embodiment operates in the following manner.

In the transmitting apparatus 500, operations of the software storing section 51, the software information managing section 52, the software fetching section 53, and the transmitting section 54 are identical with those described in the first embodiment. In the receiving apparatus 100, operations of the receiving section 1, the software managing section 5, the software information judging section 2, the download judging section 3, the download executing section 4, and the software storing section 6 are identical with those described in the first embodiment.

According to the second embodiment, in the transmitting apparatus 500, the software information managing section 52 manages the software management table shown in Fig. 2. The software information managing section 52 produces the software information table (Fig. 3) based on the software management table, and sends the produced software information table to the transmitting section 54. Furthermore, the software information managing section 52 manages the download table (Fig. 4), and sends this download table to the software fetching section 53 and to the software transmitting section 54. The software fetching section 53 reads the software from the software storing section 51 with reference to the information described in the download table, and sends the readout software to the transmitting section 54. The transmitting section 54 broadcasts the software information table (Fig. 3) and the download table (Fig. 4) sent from the software information managing section 52 together with the software itself sent from the software fetching section 53 to the receiving apparatus 100.

In the receiving apparatus 100, the receiving section 1 sends the received software information table (Fig. 3) to the software information judging section 2, sends the received download table (Fig. 4) to the download judging section 3, and sends the received software to the download executing section 4. The software information judging section 2 executes the software information judging processing with reference to the received software information table (Fig. 3) and the software management table (Fig. 5) managed by the software managing section 5, and sends the renewed software information table (Fig. 6) to the download judging section 3. The download judging section 3 executes the download judging processing with reference to the software information table and the download table sent from the software information judging section 2. Based on the result of the performed download judging processing, the download judging section 3 sends the download entry (Fig. 7) to the download executing section 4 and sends the software information entry (Fig. 8) to the actual result managing section 7.

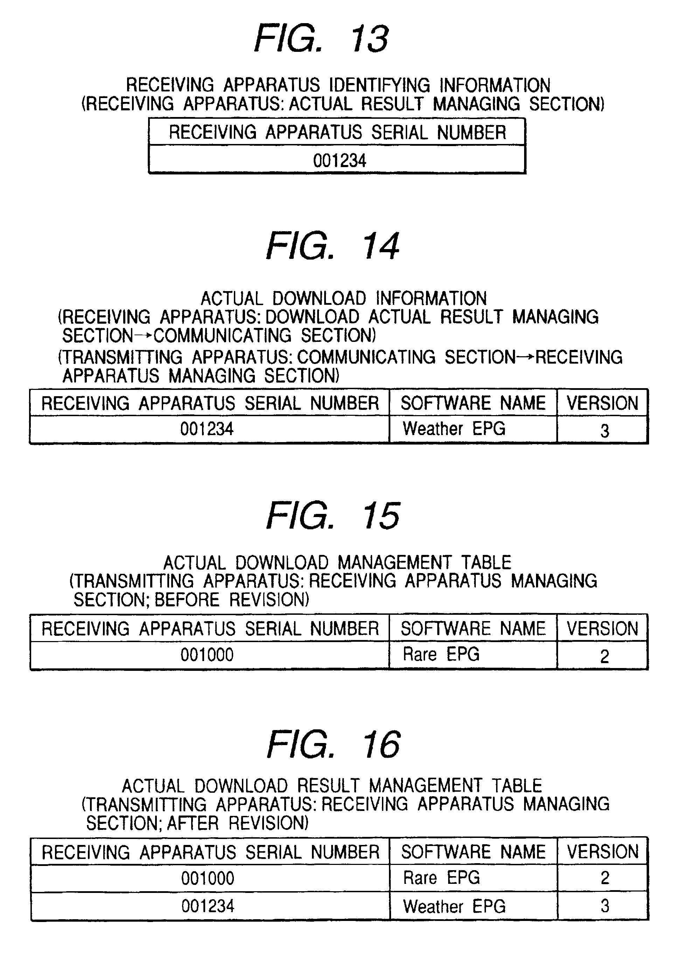

The actual result managing section 7 manages receiving apparatus identifying information (Fig. 13) used when the transmitting apparatus identifies the receiving apparatus. According to the example shown in Fig. 13, the actual result managing section 7 manages the serial number of the receiving apparatus because the serial number is inherent to each receiving apparatus.

The actual result managing section 7 receives the software information entry (Fig. 8) from the download judging section 3, and causes the communicating section 8 to establish the communication path to the transmitting apparatus 500 to notify the transmitting section of the failure in the downloading.

The communicating section 8 of the receiving apparatus 100 starts the communication with the communicating section 55 of the transmitting apparatus 500 via the telephone line in response to the request of the actual result managing section 7. When received the communication from the communicating section 8 of the receiving apparatus 100, the communicating section 55 of the transmitting apparatus 500 establishes the communication path (i.e., connects the telephone line) to the communicating section 8 of the receiving apparatus 100.

After the communication path is established between the receiving apparatus 100 and the transmitting apparatus 500, the actual result managing section 7 produces actual download information shown in Fig. 14 based on the serial number (Fig. 13) managed by the actual result managing section 7 and the software name and version described in the software information entry (Fig. 8) sent from the download judging section 3. The produced actual download information is sent to the communicating section 8.

The communicating section 8 transmits the actual download information (Fig. 14) to the transmitting apparatus 500.

In the transmitting apparatus 500, the receiving apparatus managing section 56 manages the actual result of the downloading of the software in the receiving apparatus 100 based on an actual download result management table (Figs. 15 and 16). According to the example shown in Fig. 15, the actual download management table describes the serial number of the receiving apparatus having failed in the downloading together with the software name and the version of the non-downloaded program.

The communicating section 55 of the transmitting apparatus 500 receives the actual download information from the communicating section 8 of the receiving apparatus 100, and sends the received actual download information to the receiving apparatus managing section 56.

The receiving apparatus managing section 56 adds the received actual download information (Fig. 14) to the actual download management table (Fig. 15), thereby renewing the actual download result management table (refer to Fig. 16).

As apparent from the foregoing description, in response to the failure in the downloading of the software, the receiving apparatus automatically notifies the software name and the version of the download failed software as well as the receiving apparatus identifying information (e.g., serial number of the receiving apparatus) to the transmitting apparatus without any intervention by the user. More specifically, according to the second embodiment, in the receiving apparatus (100), the notifying means (7) is for sending the download success/failure information (Fig. 14) to a transmitting apparatus (500). The download success/failure information (Fig. 14) includes a software name and a receiving apparatus identifier relating to the success/failure in the downloading. Thus, it becomes possible to reduce the burden of the user in the downloading of the software. The transmitting apparatus can manage the receiving apparatus having failed in the downloading. It becomes possible to provide support or any other appropriate procedure for the failed receiving apparatus.

### Third Embodiment

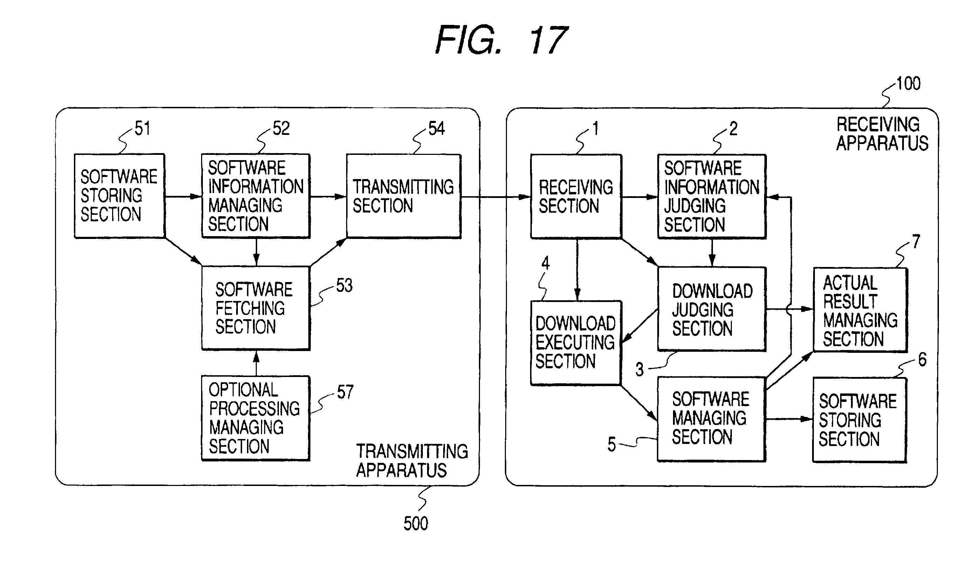

Fig. 17 is a block diagram showing a software download system in accordance with a third embodiment of the present invention. The software download system consists of a transmitting apparatus 500 and a receiving apparatus 100. The transmitting apparatus 500 comprises an optional processing managing section 57 in addition to the arrangement shown in the first embodiment. The optional processing managing section 57 manages an optional processing management table.

The receiving apparatus 100 of the third embodiment differs from that of the first embodiment in that the actual result managing section 7 performs predetermined processing designated by the transmitting apparatus in response to the failure in the downloading.

The above-described software download system of the third embodiment operates in the following manner.

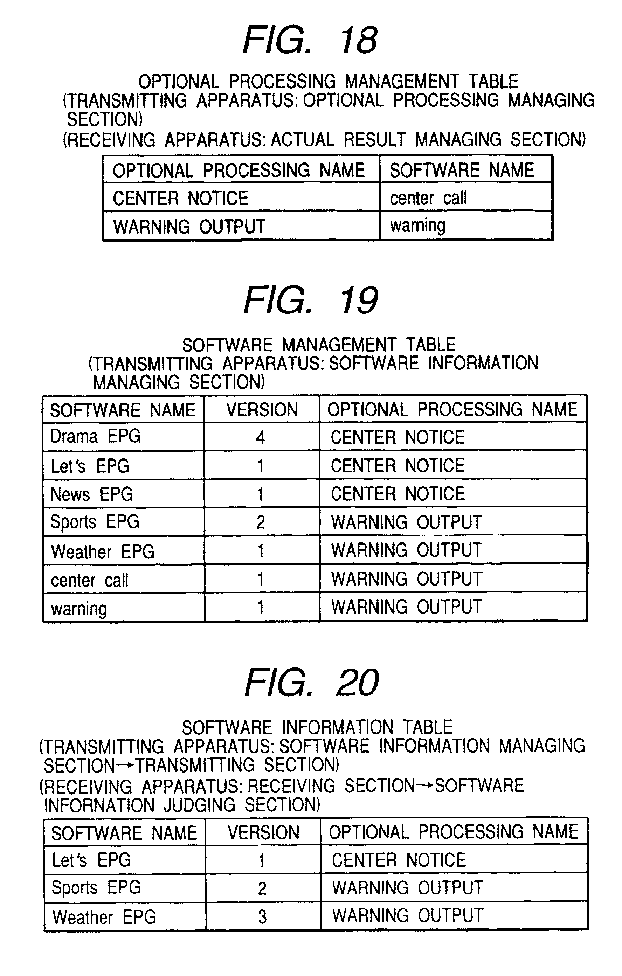

In the transmitting apparatus 500, the optional processing managing section 57 manages software information of optional processing performed in the receiving apparatus 100 when the receiving apparatus 100 failed in the downloading of the software. Fig. 18 is the optional processing management table used in the optional processing managing section 57. The optional processing management table registers optional processing executed in the receiving apparatus 100 and software realizing the optional processing. According to the example shown in Fig. 18, the optional processing "center notice " is performed by the software "center call."

The software information managing section 52 manages the software management table (Fig. 19) describing the software name, version and optional processing of each software to be downloaded to the receiving apparatus 100. In other words, the software management table (Fig. 19) includes the optional processing names in addition to the information described in the software management table (Fig. 2) which is managed by the software information managing section 52 of the transmitting apparatus 500 of the first embodiment. The optional processing described in this software management table (Fig. 19) is executed in the receiving apparatus 100 in response to the failure in the downloading. The optional processing name, corresponding to each software listed in the software management table (Fig. 19), is selected from the optional processing registered in the optional processing management table (Fig. 18) which is managed by the optional processing managing section 57.

According to the third embodiment of the present invention, the software management table (Fig. 19) includes a total of seven registered programs. For example, the registered program "Let's EPG" is version 1. It is understood that the optional processing "center notice" is executed when the receiving apparatus 100 failed in the downloading of this program.

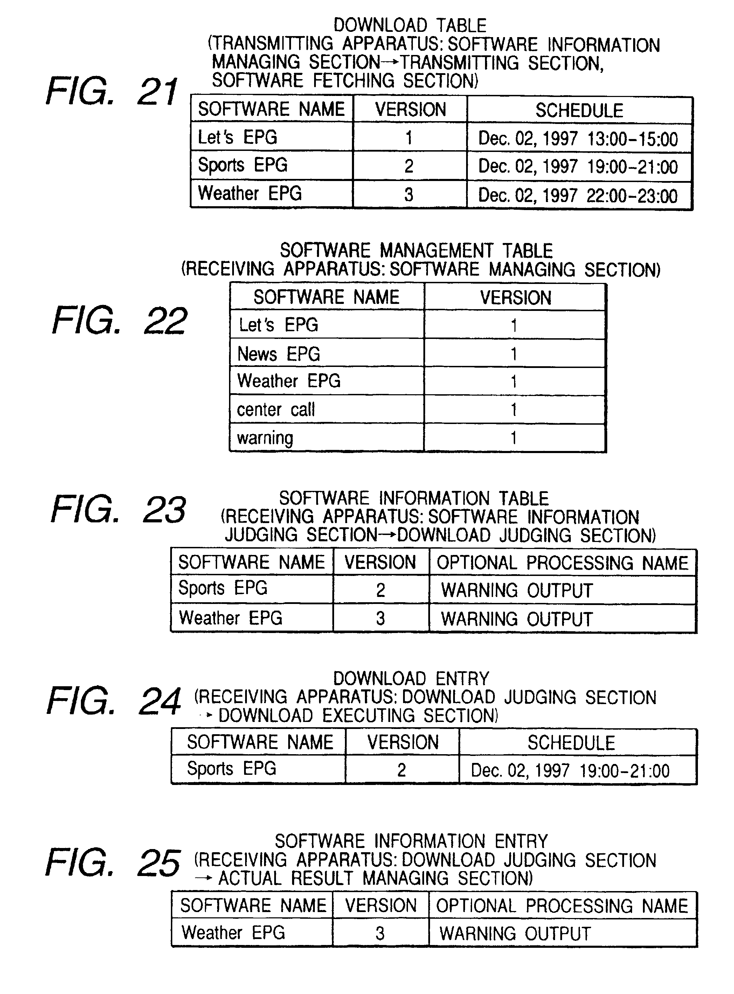

The software information managing section 52 produces a software information table (Fig. 20) with reference to the software management table. The software information table (Fig. 20), including three programs, is sent to the transmitting section 54. Furthermore, the software information managing section 52 manages a download table (Fig. 21) and sends this download table (Fig. 21) to the transmitting section 54 and to the software fetching section 53.

In the transmitting apparatus 500, operations of the software fetching section 53 and the transmitting section 54 are identical with those described in the first embodiment. The software fetching section 53 reads the software from the software storing section 51 with reference to the download table (Fig. 21) sent from the software information managing section 52, and sends the readout software to the transmitting section 54. The transmitting section 54 broadcasts the software information table and the download table sent from the software information managing section 52 together with the software itself sent from the software fetching section 53 to the receiving apparatus 100.

In the receiving apparatus 100, operations of the receiving section 1, the software managing section 5, the software information judging section 2, the download judging section 3, the download executing section 4, and the software storing section 6 are identical with those described in the first embodiment. The receiving section 1 sends the received software information table (Fig. 20) to the software information judging section 2, sends the received download table (Fig. 21) to the download judging section 3, and sends the received software to the download executing section 4. The software information judging section 2 executes the software information judging processing with reference to the software information table (Fig. 20) and a software management table (Fig. 22) managed by the software managing section 5, and sends a renewed software information table (Fig. 23) to the download judging section 3. The download judging section 3 executes the download judging processing with reference to the software information table and the download table sent from the software information judging section 2. Based on the result of the performed download judging processing, the download judging section 3 sends a download entry (Fig. 24) to the download executing section 4 and sends a software information entry (Fig. 25) to the actual result managing section 7.

The actual result managing section 7 manages the software realizing each optional processing to be performed in the receiving apparatus 100 when the receiving apparatus 100 failed in the downloading of the software. According to this embodiment, the actual result managing section 7 manages an optional processing management table identical with the optional processing management table (Fig. 18) managed by the optional processing managing section 57 of the transmitting apparatus 500.

The actual result managing section 7 receives the software information entry (Fig. 25) from the download judging section 3, and starts the optional processing. First, the actual result managing section 7 obtains the optional processing name "warning output" with reference to the software information entry (Fig. 25). Next, the actual result managing section 7 checks whether the obtained optional processing name exists in the optional processing management table (Fig. 18) managed by the actual result managing section 7. As a result of check, it is confirmed that the same optional processing name "warning output" is registered in the optional processing management table. It is also understood that the program "warning" realizes the optional processing designated in the software information entry (Fig. 25). Then, the actual result managing section 7 checks whether the program name "warning" exists in the software management table (Fig. 22) managed by the software managing section 5.As a result of check, it is confirmed that the same program name "warning" is registered in the software management table. Thus, the actual result managing section 7 starts the program "warning" to execute the optional processing.

As apparent from the foregoing description, in the transmitting apparatus, the software information managing section sets the optional processing corresponding to each software to be downloaded when the software information table is produced. More specifically, the transmitting means (54) is for transmitting a processing identifier (Fig. 20), such as a software name, for designating processing executed when the receiving apparatus failed in the downloading of the software. In the receiving apparatus, the actual result managing section executes the optional processing when the receiving apparatus has failed in the downloading of the software. More specifically, the third embodiment provides a receiving apparatus (100) comprising a receiving means (1) for receiving judgement information used for judging success/failure in the downloading of software stored in the receiving apparatus (100) and for receiving a processing identifier (Fig. 20) designating processing executed when the receiving apparatus (100) failed in the downloading of the software, a success/failure judging means (3) for judging whether the receiving apparatus (100) succeeded or failed in the downloading of the software with reference to the judgement information received by the receiving means (1), and a processing executing means (4) for executing designated processing corresponding to the processing identifier when the downloading failure is detected by the success/failure judging means (3). With this arrangement, the transmitting apparatus can control the processing performed in the receiving apparatus when the receiving apparatus has failed in the downloading. Thus, flexible processing is realized in managing the actual result of the downloading.

### Fourth Embodiment

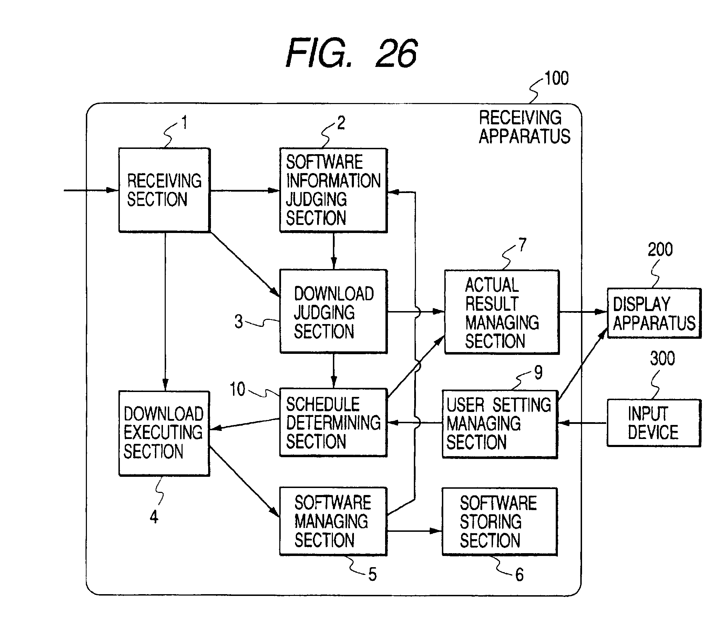

Fig. 26 is a block diagram showing a software download system in accordance with a fourth embodiment of the present invention. The software download system consists of a transmitting apparatus (identical with the transmitting apparatus 500 of the first embodiment) and a receiving apparatus 100. The receiving apparatus 100 of the fourth embodiment comprises a user setting managing section 9 and a schedule determining section 10 in addition to the arrangement of the first embodiment. The user setting managing section 9 manages download time slot information which represents the time slot of the download being set by the viewer. The schedule determining section 10 compares the download time slot information with the plurality of download schedules generated from the download judging section 3 to select the download schedule involved in the download time slot being set by the viewer. The selected download schedule is sent to the download executing section 4. A display apparatus 200 and an input device 300 are associated with the receiving apparatus 100. The viewer can enter a desirable downloading time through the input device 300. The display apparatus 200 having a screen displaying the entered user setting as well as the information generated from the actual result managing section.

The above-described software download system of the fourth embodiment operates in the following manner.

The receiving apparatus 100 comprises a receiving section 1 which receives the download broadcasting as well as the ordinary broadcasting consisting of video and audio data. The receiving section 1 can receive one transport stream (TS) or one channel (program) per receiving of the broadcasting. When the download broadcasting is received by using one channel in the same manner as the ordinary broadcasting, the viewer cannot receive the ordinary broadcasting of other channel.

In general, the shared downloading occupies one channel dedicated for the download broadcasting. However, the download broadcasting can be received together with the ordinary broadcasting. In this case, the download broadcasting is receivable while the viewer watches the ordinary broadcasting, although the channel cannot be changed to other transponder until the downloading is completed. Thus, receiving the download broadcasting will disturb the viewer's watching ordinary program. To minimize such disturbance, the receiving apparatus 100 of this embodiment allows the viewer to select a preferable download time. For example, when the viewer seldom receives the broadcasting in a particular time slot, this time slot will be a preferable download time.

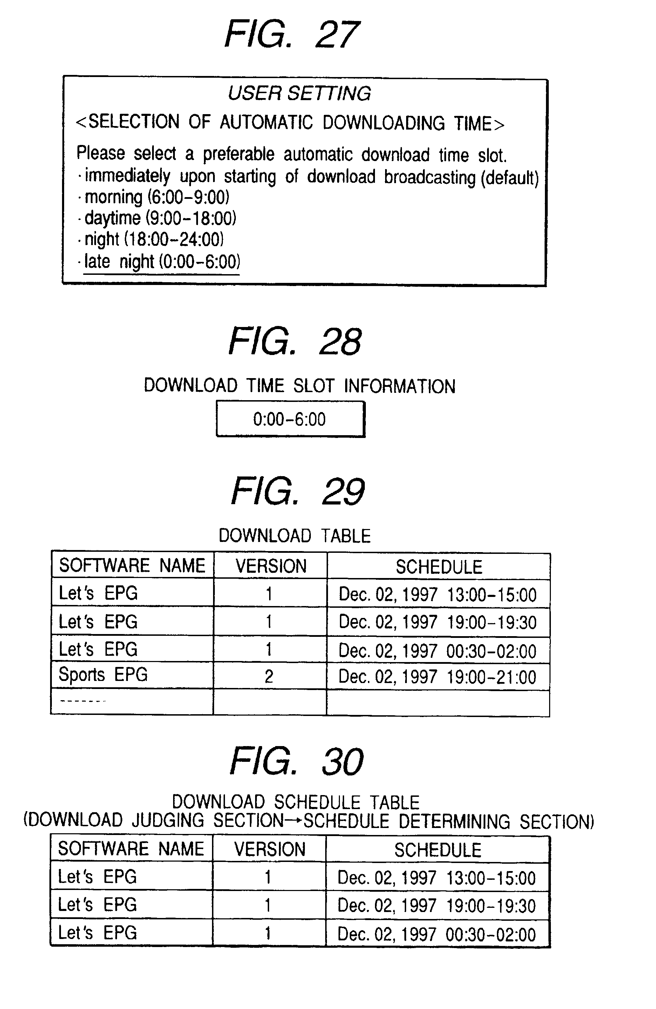

The viewer manipulates the input device 300 to request the screen display of the user setting. In response to this request, the user setting managing section 9 displays the user setting screen shown in Fig. 27 through the display apparatus 200. The viewer selects a preferable download time from a plurality of options indicated on the user setting screen when the selected time slot does not disturb the viewer's watching a preferable ordinary program. The user setting managing section 9 manages the download time information selected by the viewer, as shown in Fig. 28.

The transmitting apparatus 500 produces a download table describing a plurality of broadcasting time slots for one software as shown in Fig. 29. The produced download table is broadcasted to the receiving apparatus 100. The download judging section 3 stores the received download table (Fig. 29). The download judging section 3 chooses the information of the software to be downloaded from the download table (Fig. 29) in response to the input from the software information judging section 2, and produces a download schedule table shown in Fig. 30. The produced download schedule table is sent to the schedule determining section 10.

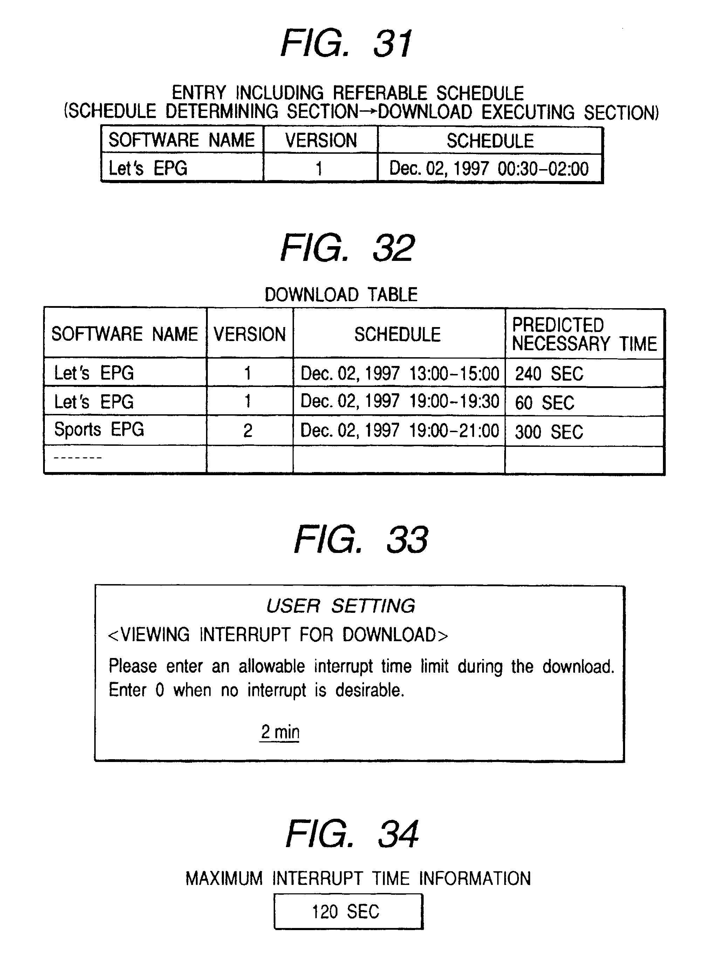

The schedule determining section 10 obtains the download time information (Fig. 28) from the user setting managing section 9, and compares it with the received download schedule table (Fig. 30). When any schedule meets the preferable download time slot indicated by the download time information (Fig. 28), an entry including the preferable schedule (Fig. 31) is sent to the download executing section 4. If there are a plurality of schedules meeting the preferable download time slot, the entry including the earliest schedule will be selected. If no schedule meets the preferable download time slot, the schedule determining section 10 sends the software name and version of the download failed program to the actual result managing section 7. The actual result managing section 7 outputs the message (refer to Fig. 11) to the display apparatus 200 as described in the first embodiment, thereby notifying the failure in the downloading. It is also possible to send the success/failure information including the software name and the receiving apparatus identifier as described in the second embodiment. The download executing section 4 and others operate in the same manner as those described in the first embodiment.

As apparent from the foregoing description, the viewer can designate the download time so that the downloading is allowed only during the designated download time. More specifically, the fourth embodiment discloses a receiving apparatus (100) comprising a time slot information managing means (9) for managing time slot information including start date/time and end date/time, a schedule judging means (10) for judging whether there is any download broadcasting having broadcasting schedule meeting the time slot managed by the time slot information managing means (9), and a download executing means (4) for executing the downloading of software from the download broadcasting when the schedule judging means (10) confirms the presence of a satisfactory download broadcasting. Thus, it becomes possible to realize the software download system (receiving apparatus) capable of preventing the downloading from disturbing the viewer's watching favorable program.

Regarding the time to compare the download time information with the download schedule table, the schedule determining section can compare them on or immediately before the beginning of the designated download time since similar effects will be obtained. Furthermore, when the receiving apparatus possesses time function, the present time information required for executing the downloading can be obtained from this time function. Alternatively, it is possible to utilize the time information sent through the broadcasting.

### Fifth Embodiment

The software download system shown in Fig. 26 is applicable to a fifth embodiment of the present invention. However, the fifth embodiment differs from the fourth embodiment in that the user setting managing section 9 manages maximum interrupt time information which represents the allowable maximum interruption of the program viewing, being set by the viewer for executing the downloading. The schedule determining section 10 compares the maximum interrupt time information with the plurality of download schedules generated from the download judging section 3 to select the download schedule meeting the maximum interrupt time being set by the viewer through the input device 300.

The above-described software download system of the fifth embodiment operates in the following manner.

In the transmitting apparatus 500, the software information managing section (refer to Fig. 1) produces a download table (Fig. 32) describing the software name, the version, the schedule and the predicted necessary time of each program. The predicted necessary time is an average time required for the receiving apparatus to complete the downloading. The produced download table (Fig. 32) is broadcasted to the receiving apparatus 100. The download judging section holds the received download table (Fig. 32).

The viewer manipulates the input device 300 to request the screen display of the user setting. In response to this request, the user setting managing section 9 displays the user setting screen shown in Fig. 33 through the display apparatus 200. The viewer inputs an allowable interrupt time for the downloading on the user setting screen when the entered time does not disturb the viewer's watching a preferable ordinary program. When the viewer denies any interruption, the viewer enters 0. The user setting managing section 9 manages the maximum interrupt time information entered by the viewer, as shown in Fig. 34.

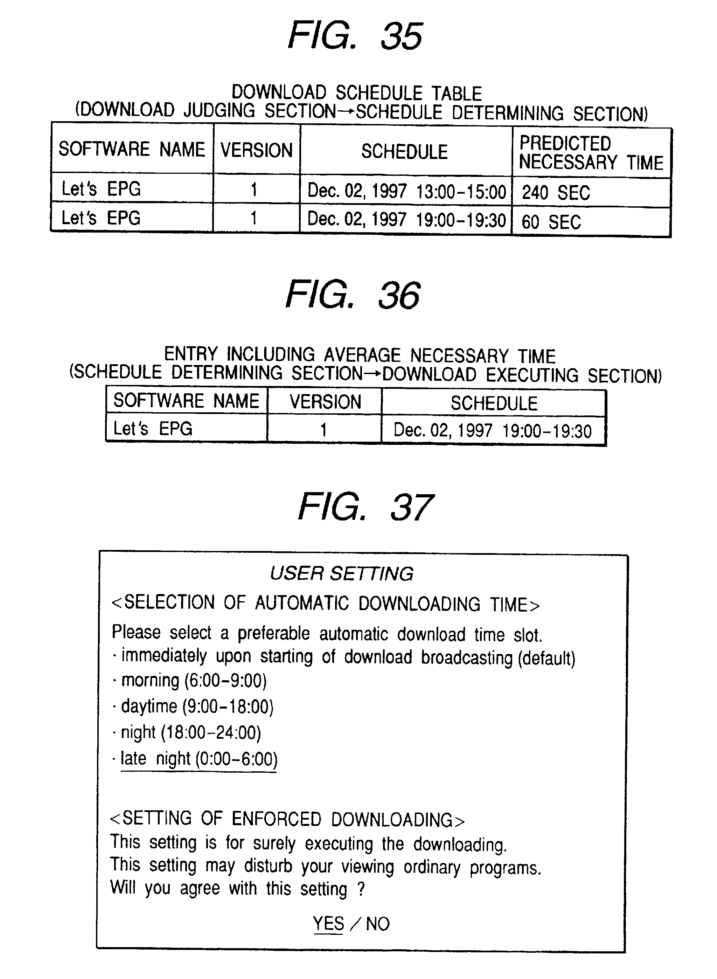

The download judging section 3 chooses the information of the software to be downloaded from the download table (Fig. 32) in response to the input from the software information judging section 2, and produces a download schedule table shown in Fig. 35. The produced download schedule table is sent to the schedule determining section 10.

The schedule determining section 10 obtains the maximum interrupt time information (Fig. 34) from the user setting managing section 9, and compares it with the received download schedule table (Fig. 35). When any predicted necessary time meets the allowable maximum interrupt time information (Fig. 34), an entry including the average necessary time (Fig. 35) is sent to the download executing section 4. If there are a plurality of average necessary times meeting the allowable maximum interrupt time information, the entry including the shortest average necessary time will be selected. If no entry meets the allowable maximum interrupt time information, the schedule determining section 10 sends the software name and version of the download failed program to the actual result managing section 7. The actual result managing section 7 outputs the message (refer to Fig. 11) to the display apparatus 200 as described in the first embodiment, thereby notifying the failure in the downloading. It is also possible to send the success/failure information including the software name and the receiving apparatus identifier as described in the second embodiment. The download executing section 4 and others operate in the same manner as those described in the first embodiment.

As apparent from the foregoing description, the viewer can designate the allowable maximum interrupt time for the downloading so that the downloading is allowed only during the designated time. More specifically, according to the fifth embodiment, the transmitting means (54) is for transmitting a necessary time required for the receiving apparatus to download the software from a download broadcasting. The receiving apparatus (100) comprising a maximum interrupt time managing means (9) for managing a maximum interrupt time for downloading software which represents an allowable maximum interruption of program viewing, a schedule judging means (10) for judging whether there is any download broadcasting having a necessary download time equal to or smaller than the maximum interrupt time managed by the maximum interrupt time managing means (9), and a download executing means (4) for executing the downloading of the software from the download broadcasting when the schedule judging means (10) confirms the presence of a satisfactory download broadcasting. Thus, it becomes possible to realize the software download system (receiving apparatus) capable of by preventing the downloading from disturbing the viewer's watching favorable program, thereby suppressing viewer's dissatisfaction and irritation and realizing an automatic downloading.

### Sixth Embodiment

The software download system shown in Fig. 26 is applicable to a sixth embodiment of the present invention. However, the sixth embodiment differs from the fourth embodiment in that the user setting managing section 9 manages an enforced download flag as well as the download time information. The enforced download flag indicates the decision as to whether the receiving of a download broadcasting designated by the viewer is surely completed until the final chance of receiving the download broadcasting. The schedule determining section 10 receives both the enforced download flag and the plurality of download schedules generated from the download judging section 3. When the final chance for receiving the designated download broadcasting comes and the enforced download flag indicates the execution of the downloading, the schedule determining section 10 surely selects the download schedule and sends it to the download executing section 4. The viewer can enter the preferable download time slot as well as the decision as to the execution of the enforced downloading through the input device 300.

The above-described software download system of the sixth embodiment operates in the following manner.

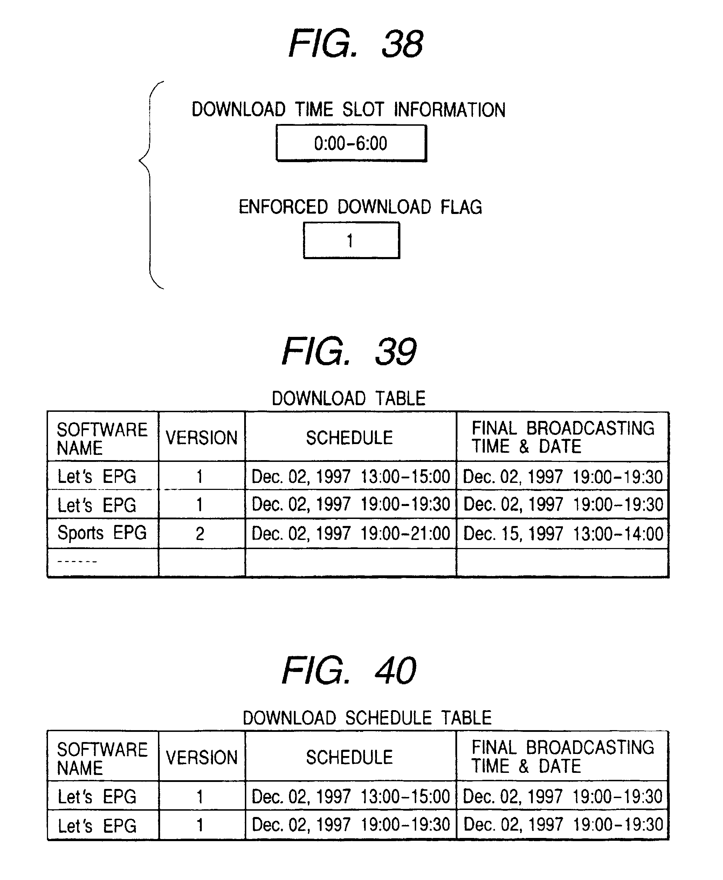

The viewer manipulates the input device 300 to request the screen display of the user setting. In response to this request, the user setting managing section 9 displays the user setting screen shown in Fig. 37 through the display apparatus 200.The viewer selects a preferable download time from a plurality of options indicated on the user setting screen when the selected time slot does not disturb the viewer's watching a preferable ordinary program. Furthermore, the viewer inputs the decision as to whether the viewer agrees with the setting of the enforced downloading. The user setting managing section 9 manages the download time information selected by the viewer and the enforced download flag as shown in Fig. 38. The viewer enters a value "1" for setting the enforced downloading and "0" for canceling the enforced downloading.

The transmitting apparatus 500 produces a download table describing the software name, the version, the schedule and the final broadcasting date and time for each program as shown in Fig. 39. The produced download table is broadcasted to the receiving apparatus 100. The download judging section 3 stores the received download table (Fig. 39).

The download judging section 3 chooses the information of the software to be downloaded from the download table (Fig. 39) in response to the input from the software information judging section 2, and produces a download schedule table shown in Fig. 40. The produced download schedule table is sent to the schedule determining section 10.

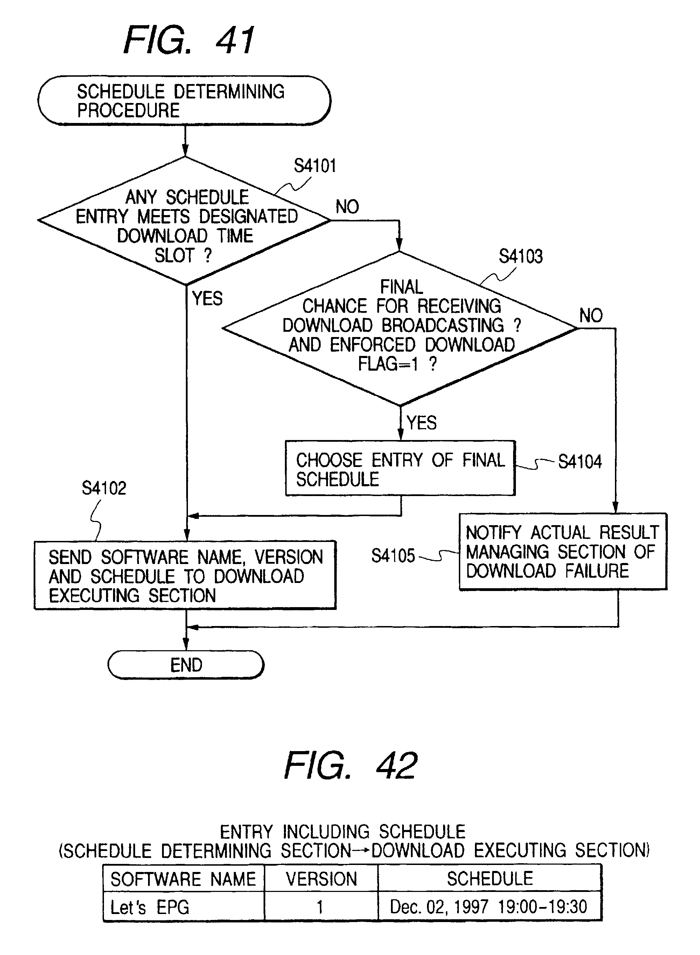

The schedule determining section 10 obtains both the download time information and the enforced download flag (Fig. 38) from the user setting managing section 9, and compares them with the received download schedule table (Fig. 40). Details of the comparison performed in the schedule determining section 10 will be explained with reference to the flowchart shown in Fig. 41. First, it is checked whether any schedule entry registered in the download schedule table (Fig. 40) meets the designated download time slot (step S4101). When there is any schedule entry meeting the designated download time slot, the schedule determining section 10 chooses this schedule entry from the download schedule table (Fig. 40) and sends it to the download executing section 4 (step S4102). If there are a plurality of schedules meeting the designated download time slot, the entry including the earliest schedule will be selected. If no schedule entry meets the designated download time slot, it is then checked whether this is the final chance for receiving the download broadcasting. More specifically, the final broadcasting date and time shown in the download schedule table (Fig. 40) is compared with the present date and time. Furthermore, it is checked whether the enforced download flag is 1 (step S4103). When the final chance for receiving the download broadcasting comes and the enforced download flag is 1, the schedule determining section 10 chooses the software name, the version and the schedule of the final schedule from the download schedule table (Fig. 40), as shown in Fig. 42 (step S4104). Then, the final schedule is sent to the download executing section 4 (step S4102). When the final chance for receiving the download broadcasting has not come yet and the enforced download flag is 0, the schedule determining section 10 sends the software name and the version of the download failed program to the actual result managing section 7. The actual result managing section 7 outputs the message (refer to Fig. 11) to the display apparatus 200 as described in the first embodiment, thereby notifying the failure in the downloading (step S4105). It is also possible to send the success/failure information including the software name and the receiving apparatus identifier as described in the second embodiment. The download executing section 4 and others operate in the same manner as those described in the fourth embodiment.

As apparent from the foregoing description, the viewer can request the enforced downloading of the designated software. More specifically, according to the sixth embodiment, the transmitting means (54) is for transmitting final broadcasting date/time of a download broadcasting. The receiving apparatus (100) comprising a final broadcasting date/time flag managing means (9) for managing a final broadcasting date/time flag, the final broadcasting date/time flag indicating decision of enforced downloading which forcibly downloads software from a download broadcasting without missing the chance for receiving the download broadcasting, a final broadcasting date/time judging means (10) for judging whether the final broadcasting date/time flag indicates the execution of the enforced downloading and whether the final chance for receiving the download broadcasting comes, and a download executing means (4) for executing the downloading of the software from the download broadcasting when the final broadcasting date/time judging means (10) confirms that the final broadcasting date/time flag indicates the execution of the enforced downloading and the present download broadcasting is the final chance for downloading the software. Furthermore, the sixth embodiment discloses the receiving apparatus (100) comprising an enforced download flag managing means (9) for managing an enforced downloading flag, the enforced downloading flag indicating forcible execution of downloading of software from a download broadcasting, an enforced download judging means (10) for judging whether the enforced downloading flag indicates the forcible execution of the software downloading from the download broadcasting, and a download executing means (4) for executing the downloading of the software from the download broadcasting when the enforced download judging means (10) confirms that the enforced downloading flag indicates the forcible execution of the software downloading from the download broadcasting.

Thus, it becomes possible to realize the software download system (receiving apparatus) capable of automatically and forcibly executing the downloading when the final chance for receiving the download broadcasting comes.

The above-described sixth embodiment is explained based on the software download system of the fourth embodiment. However, the sixth embodiment can be realized on the software download system of the fifth embodiment.

Furthermore, it is possible to change the order of the steps S4101 and S4103 in the flowchart shown in Fig. 41, so that schedule determining section 10 executes the step S4101 after completing the step S4103..

### Seventh Embodiment

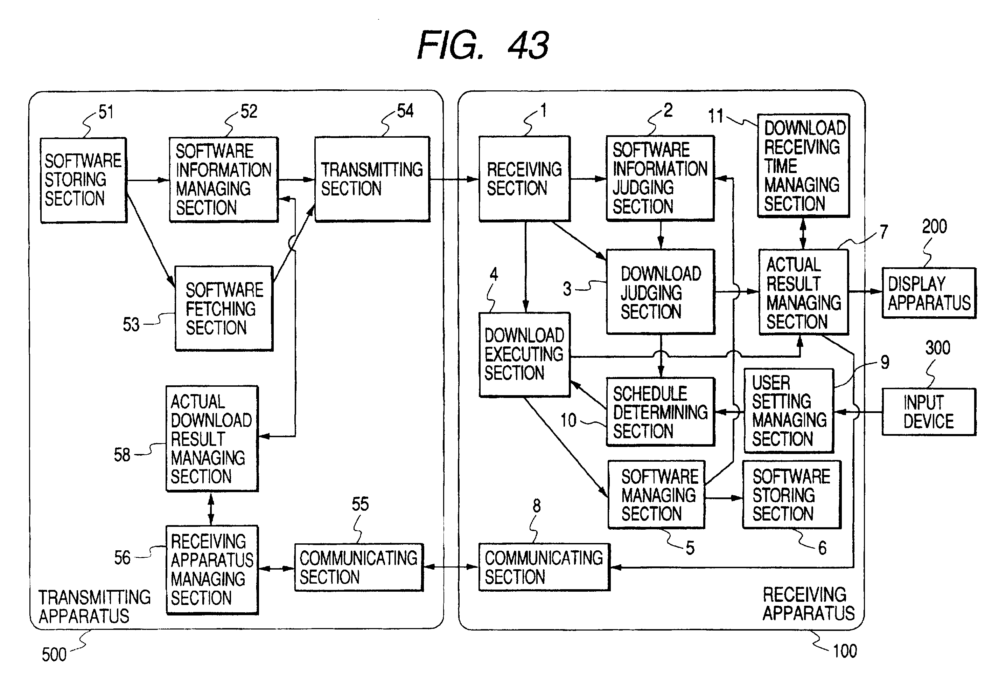

Fig. 43 is a block diagram showing a software download system in accordance with a seventh embodiment of the present invention. The software download system consists of a transmitting apparatus 500 and a receiving apparatus 100. The transmitting apparatus 500 comprises a communicating section 55, a receiving apparatus managing section 56, and an actual download result managing section 58 in addition to the arrangement shown in the first embodiment. The communicating section 55 transmits an acquiring request for obtaining the download broadcast receiving time to the receiving apparatus 100, and receives the download broadcast receiving time returned from the receiving apparatus 100 together with the receiving apparatus identifying information. The receiving apparatus managing section 56 manages the download broadcast receiving time and the receiving apparatus identifying information. The actual download result managing section 58 compares the download broadcast receiving time managed by the receiving apparatus managing section 56 with the download table managed by the software information managing section 52. The actual download result managing section 58 manages actual download result information indicating the receiving apparatus which received the download broadcasting in each time of the broadcasting.

The receiving apparatus 100 of the seventh embodiment comprises a download receiving time managing section 11 and a communicating section 8 in addition to the arrangement shown in the fourth embodiment. The download receiving time managing section 11 manages the receiving time of the download broadcasting. The communicating section 8 transmits the receiving time of the download broadcasting and the receiving apparatus identifying information to the transmitting apparatus 500.

The above-described software download system of the seventh embodiment operates in the following manner.

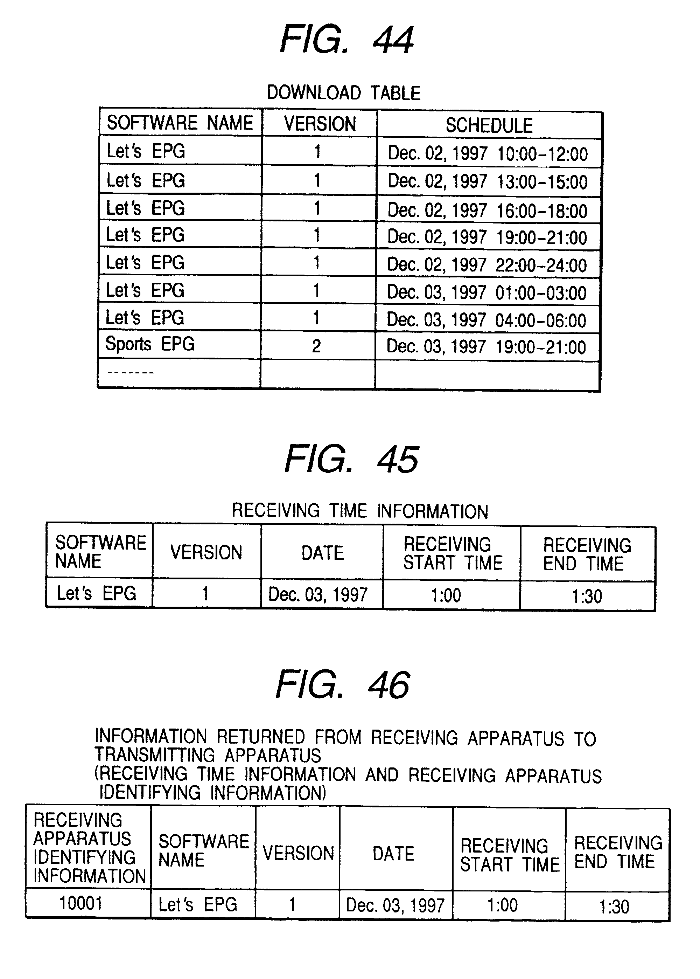

In the transmitting apparatus 500, the software information managing section 52 produces a download table describing a plurality of schedules for one software as shown in Fig. 44. The produced download table is broadcasted to the receiving apparatus 100. The download judging section 3 stores the received download table (Fig. 44). As described in the fourth embodiment, the schedule determining section 10 selects the download broadcasting having the schedule meeting the preferable download time designated by the viewer. The download executing section 4 receives the download broadcasting, and produces receiving time information (Fig. 45) including software name, version, date, receiving start time and receiving end time. The produced receiving time information (Fig. 45) is sent to the actual result managing section 7. The actual result managing section 7 sends the receiving time information (Fig. 45) to the download receiving time managing section 11. The download receiving time managing section 11 records the receiving time information (Fig. 45).

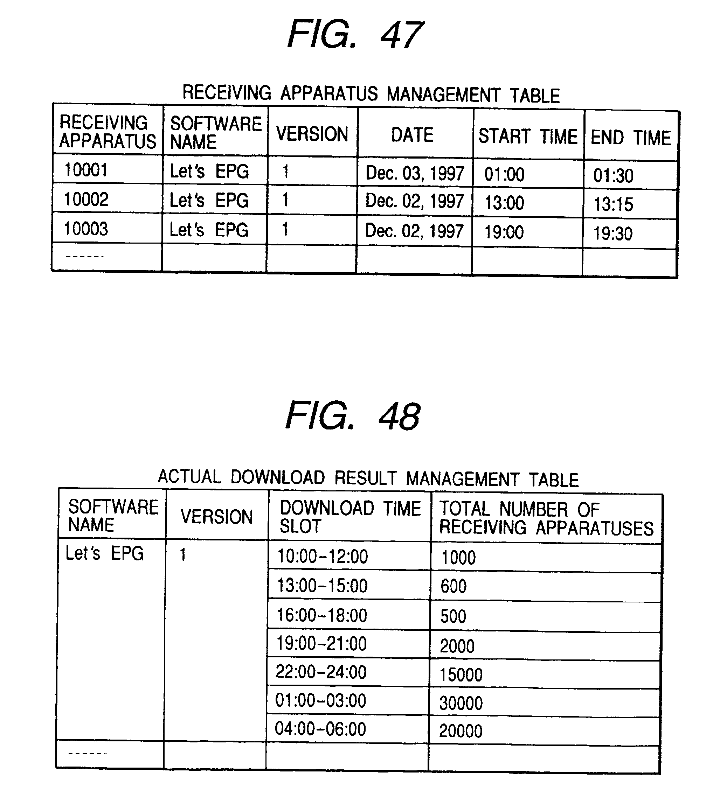

The receiving apparatus managing section 56 transmits an acquiring request for obtaining the receiving time information. This acquiring request is periodically (e.g., once a week) transmitted to each receiving apparatus 100 via the communicating section 55. In the receiving apparatus 100, the communicating section 8 sends the received acquiring request to the actual result managing section 7. The actual result managing section 7 reads the receiving time information (Fig. 45) from the download receiving time managing section 11, and produces returning information (Fig. 46) including the receiving apparatus identifying information and the receiving time information. This information (Fig. 46) is returned to the transmitting apparatus 500 via the communicating section 8. In the transmitting apparatus 500, the receiving apparatus managing section 56 manages the receiving time information sent from the receiving apparatus 100 as shown in Fig. 47.

The actual download result managing section 58 compares the download table (Fig. 44) broadcasted from the software information managing section 52 with the receiving time information (Fig. 47) managed by the receiving apparatus managing section 56, and produces an actual download result management table (Fig. 48) including the download broadcasting time slot and the total number of receiving apparatuses for each software. The actual download result management table (Fig. 48) is used in the determination of the next download broadcasting schedule. For example, the download broadcasting may be canceled when the total number of the receiving apparatuses receiving this download broadcasting is small. The download broadcasting can be rescheduled to other time slot when the receiving of the download broadcasting by a large number of receiving apparatuses is expected.

The actual result managing section 7 notifies the success/failure of executed download to the outside of the receiving apparatus 100 via the display apparatus 200. It is also possible to notify the success/failure of executed download to the transmitting apparatus 500. The transmitted information includes the software name and the receiving apparatus identifier relating to the success/failure in the downloading.

As apparent from the foregoing description, each receiving apparatus records the receiving time information of the download broadcasting. The transmitting apparatus collects the receiving time information from respective receiving apparatuses and manages the collected information as the actual download result management table. The transmitting apparatus determines the schedule of the next download broadcasting with reference to the actual download result management table. More specifically, according to the seventh embodiment, the transmitting apparatus (500) further comprises a receiving apparatus managing means (58) for managing both time slot information and receiving apparatus counting information, the receiving apparatus count information including the total number of receiving apparatuses having succeeded/failed in a time slot designated by start date/time and end date/time described in the time slot information, and a schedule determining means (52) for determining a schedule of a download broadcasting with reference to the receiving apparatus count information, so that the download broadcasting can be received by a large number of receiving apparatuses. Furthermore, the seventh embodiment discloses a receiving apparatus (100) comprising an executed download recording/managing means (11) for recording and managing executed download information including date/time of success/failure in the downloading, and a notifying means (7) for notifying the executed download information to the outside of the receiving apparatus.

Thus, it becomes possible to effectively utilize the bandwidth by concentrating the schedules into a specific time slot without reducing the total number of receiving apparatuses receiving the download broadcasting, i.e., without reducing the sureness of being received by the receiving apparatuses.

The above-described seventh embodiment is explained based on the software download system of the fourth embodiment. However, the seventh embodiment can be realized on the software download system of the fifth embodiment.

### Eighth Embodiment

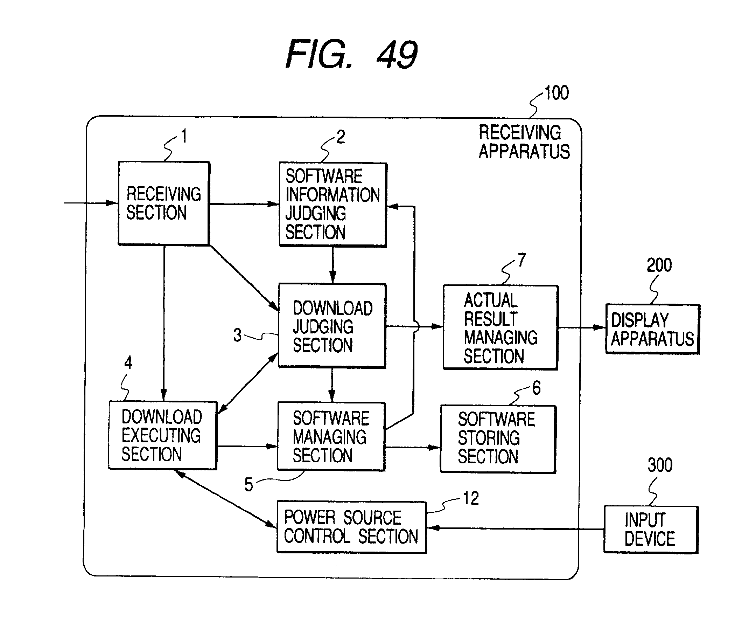

Fig. 49 is a block diagram showing a software download system in accordance with an eighth embodiment of the present invention. The software download system consists of a transmitting apparatus (identical with the transmitting apparatus 500 of the first embodiment) and a receiving apparatus 100. The receiving apparatus 100 of the eighth embodiment comprises a power source control section 12 which monitors the power-off condition of the receiving apparatus 100 and controls the power on-and-off of the receiving apparatus according to the manipulation of the viewer through the input device 300. The download executing section 4 of the eighth embodiment manages the schedule of the download broadcasting sent from the download judging section 3. The download executing section 4 accesses the power source control section 12 on or immediately before the start time of the download broadcasting, and receives the download broadcasting only when the receiving apparatus is in the power-off condition. The rest of the eighth embodiment operate in substantially the same manner as those in the fourth embodiment.

The above-described software download system of the eighth embodiment operates in the following manner.

The receiving apparatus 100 has two power conditions; i.e., a power-on condition for allowing all operations including the downloading and viewing of ordinary programs, and a power-off condition for deactivating the receiving apparatus 100. The power source control section 12 controls the power condition of the receiving apparatus 100. More specifically, the viewer manipulates the input device 300, such as a remote controller, to start the viewing. The power source control section 12 starts supplying electric power to a video/audio circuit (not shown) to switch the condition of the receiving apparatus 100 from the power-off condition to the power-on condition. When the viewer manipulates the input device 300 to finish the viewing, the power source control section 12 stops supplying electric power to the video/audio circuit to switch the condition of the receiving apparatus 100 from the power-on condition to the power-off condition.

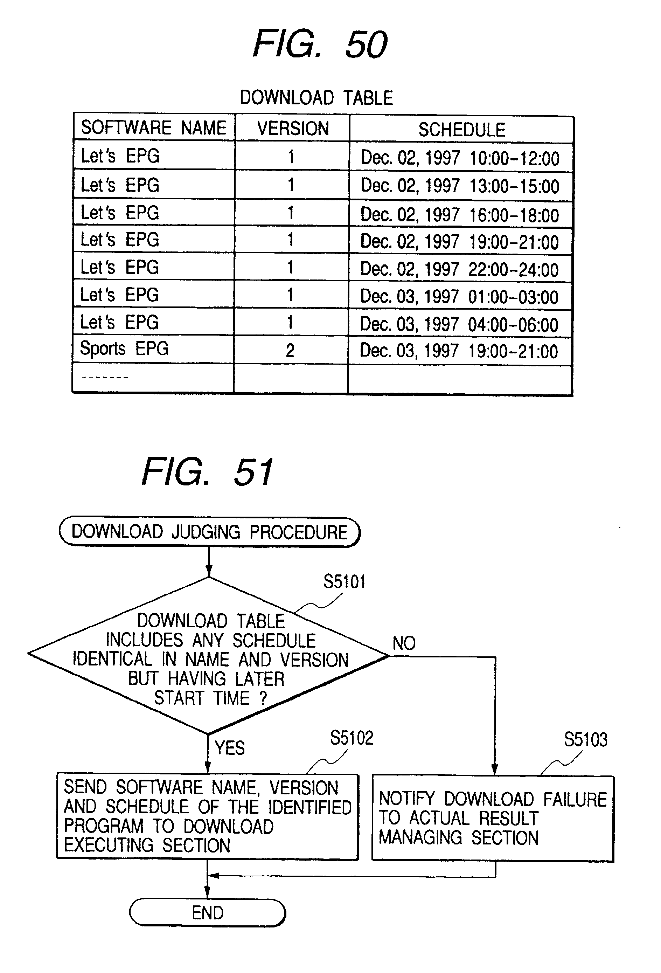

In the transmitting apparatus 500, the software information managing section 52 produces a download table describing a plurality of schedules for one software as shown in Fig. 50. The produced download table is broadcasted to the receiving apparatus 100. The download judging section 3 stores the received download table (Fig. 50) including the data sorted by the order of broadcast start time. The download judging section 3 is responsive to the software name and version entered from the software information judging section 2 and chooses the download schedule information of the designated download broadcasting which has the earliest broadcast time. The chosen download schedule information is sent to the download executing section 4. The download executing section 4 sends power condition confirming request to the power source control section 12 on or immediately before the start time of the download broadcasting included in the received download schedule information. In response to the power condition confirming request, the power source control section 12 returns the present power source condition to the download executing section 4. When the power source is in the power-off condition, the download executing section 4 executes the download broadcasting and sends the received software to the software managing section 5. When the power source is in the power-on condition, the download executing section 4 cancels receiving the download broadcasting and notifies the software name, the version and the schedule of the download failed program to the download judging section 3.

Fig. 51 is a flowchart showing the operation of the download judging section 3 performed in response to the failure in the download broadcasting. The download judging section 3 searches the download table (Fig. 50) to check whether there is any schedule having the same software name and version as those of the download failed program but having start time later than that of the download failed program (step S5101). When any download broadcasting registered in the download table agrees with the download failed software, the download judging section 3 sends the download schedule information consisting of the software name, the version, and the schedule of the agreed software to the download executing section 4 (step S5102). When no download broadcasting in the download table agrees with the download failed software, i.e., when the receiving apparatus misses the final chance of receiving the download broadcasting, the download judging section 3 sends the software name and the version of the download failed program to the actual result managing section 7 (step S5103). The actual result managing section 7 outputs the message (refer to Fig. 11) to the display apparatus 200 as described in the first embodiment, thereby notifying the failure in the downloading. It is also possible to send the success/failure information including the software name and the receiving apparatus identifier as described in the second embodiment.

As apparent from the foregoing, the receiving of the download broadcasting is executed only when the power source of the receiving apparatus is in the power-off condition. More specifically, the eighth embodiment discloses the receiving apparatus (100) comprising a viewing condition managing means (12) for managing user's viewing information represented by activation or deactivation of the receiving apparatus, a viewing condition judging means (4) for checking whether the receiving apparatus is in an activated condition or in a deactivated condition based on the user's viewing information managed by the viewing condition managing means (12), and a download executing means (4) for executing the downloading of software only when the viewing condition judging means confirms that the receiving apparatus is in the deactivated condition. Furthermore, the eighth embodiment discloses the receiving apparatus (100) comprising a viewing condition managing means (12) for managing user's viewing information represented by activation or deactivation of the receiving apparatus, a download schedule judging means (4) for checking whether any download broadcasting is present, and a download executing means (4) for executing the downloading of software only when the receiving apparatus is in a deactivated condition and the download broadcasting is present.

Thus, it becomes possible to realize the software download system capable of automatically executing the downloading without disturbing the viewer's watching favorable program.

### Ninth Embodiment

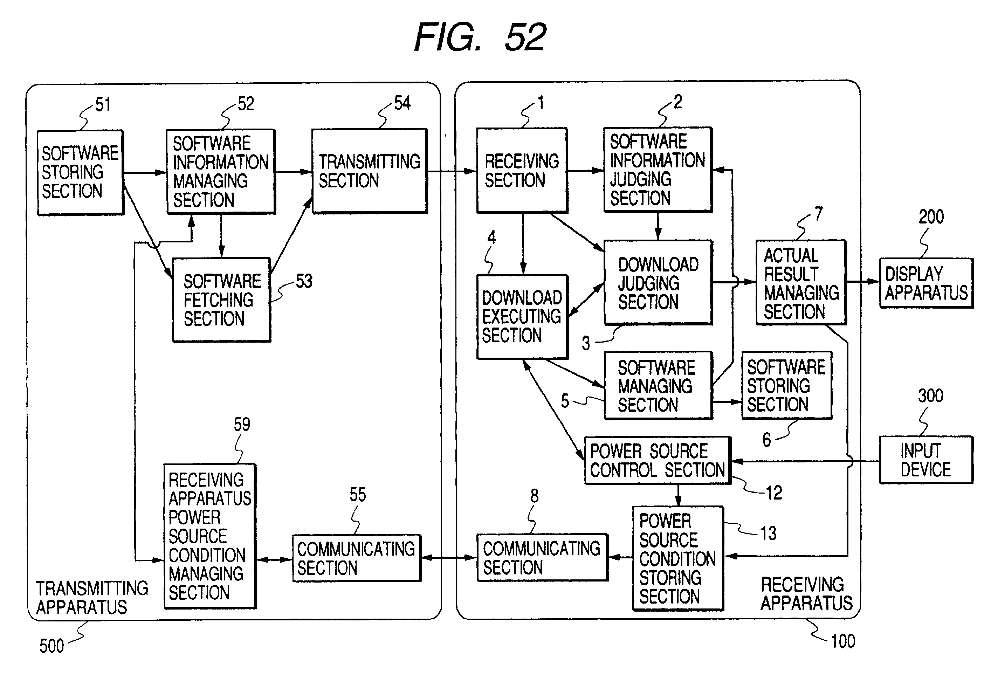

Fig. 52 is a block diagram showing a software download system in accordance with a ninth embodiment of the present invention. The software download system consists of a transmitting apparatus 500 and a receiving apparatus 100. The transmitting apparatus 500 comprises a communicating section 55 and a receiving apparatus power source condition managing section 59 in addition to the arrangement shown in the first embodiment. The communicating section 55 transmits an acquiring request to the receiving apparatus 100. This acquiring request is for obtaining time information relating to the power on-and-off of the power source in the receiving apparatus 100. The communicating section 55 receives the returned information returned from the receiving apparatus 100. The returned information includes the present power source condition and the latest power on-and-off time of this power source. The receiving apparatus power source condition managing section 59 collects the information returned from the receiving apparatus 100, and counts the total number of the deactivated (i.e., off-powered) receiving apparatuses in slot.

The receiving apparatus 100 of the ninth embodiment comprises a power source condition storing section 13 which memorizes and manages both the present power source condition and the latest power on-and-off time as a set of associated data of each power source. The communicating section 8 is responsive to the request from the transmitting apparatus 500 and returns both the present power source condition and the latest power on-and-off time managed by the power source condition storing section 13. The rest of the receiving apparatus 100 of the ninth embodiment operate in substantially the same manner as those in the eighth embodiment.

The above-described software download system of the ninth embodiment operates in the following manner.

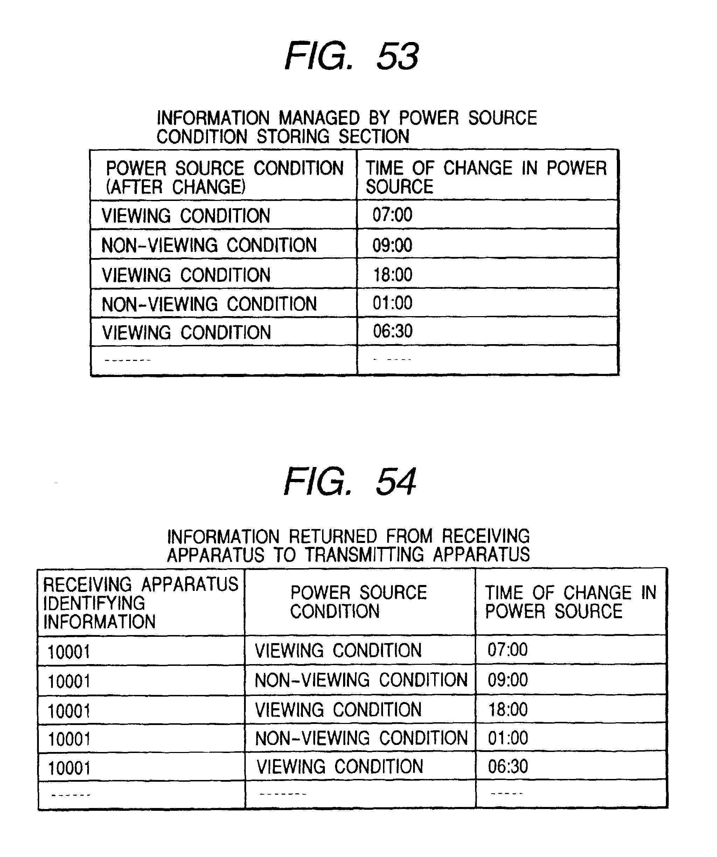

In the receiving apparatus 100, the power source control section 12 controls the change of the power condition of the receiving apparatus 100 in accordance with the viewer's manipulation. The power source condition storing section 13 records the present power source condition and the latest power on-and-off time after the manipulation by the viewer. Fig. 53 is a table managed by the power source condition storing section 13, including the set data consisting of the present power source condition and the latest power on-and-off time.

In the transmitting apparatus 500, the receiving apparatus power source condition managing section 59 transmits an acquiring request for obtaining the power on-and-off time of the receiving apparatus. The acquiring request is periodically (e.g., once a week) transmitted to each receiving apparatus 100 via the communicating section 55. In response to the acquiring request, the power source condition storing section 13 reads the receiving apparatus identifying information from the actual result managing section 7, and transmits the readout data together with the set data consisting of the present power source condition and the latest power on-and-off time (refer to Fig. 54).

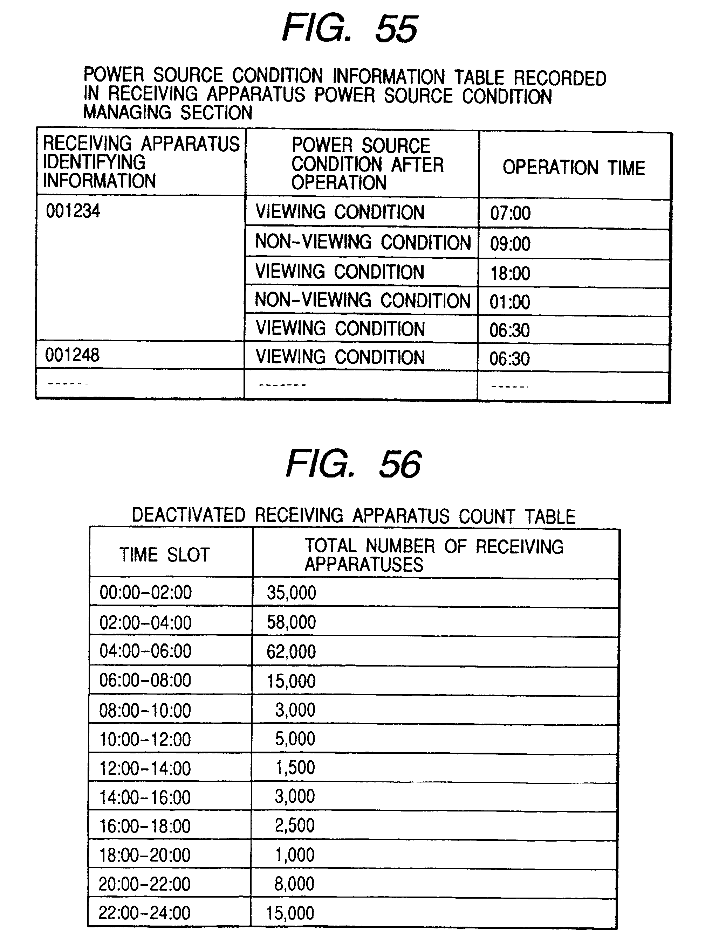

In the transmitting apparatus 500, the receiving apparatus power source condition managing section 59 records the received data, i.e., the receiving apparatus identifying information and the set data consisting of the present power source condition and the latest power on-and-off time (refer to Fig. 55). The receiving apparatus power source condition managing section 59 divides one day into a plurality of time slots (e.g., twelve time slots of 2 hours), and counts the total number of the deactivated (off-powered) receiving apparatuses in each time slot. The receiving apparatus power source condition managing section 59 produces a deactivated receiving apparatus count table (Fig. 56) including set data consisting of the time slot and the total number of deactivated receiving apparatuses.

The deactivated receiving apparatus count table (Fig. 56) is used in determining the next download broadcasting schedule. With reference to the deactivated receiving apparatus count table, the download broadcasting schedule can be effectively determined. For example, the download broadcasting will be performed as scheduled when the total number of the receiving apparatuses receiving this download broadcasting is large. However, the download broadcasting may be canceled when the total number of the receiving apparatuses receiving this download broadcasting is small. Thus, it becomes possible to schedule the download broadcasting so that this download broadcasting can be surely received by a large number of receiving apparatuses.

As apparent from the foregoing description, the transmitting apparatus collects the power on-and-off time information from each receiving apparatus, and counts the total number of deactivated receiving apparatuses in each time slot. The counted data is utilized in determining the next download broadcasting schedule. More specifically, according to the ninth embodiment, the transmitting apparatus (500) further comprises a receiving apparatus managing means (59) for managing both time slot information and receiving apparatus counting information, the receiving apparatus count information including the total number of activated or deactivated receiving apparatuses in a time slot designated by start date/time and end date/time described in the time slot information, and a schedule determining means (52) for determining a schedule of a download broadcasting with reference to the receiving apparatus count information, so that the download broadcasting can be received by a large number of receiving apparatuses. The receiving apparatus (100) comprises a power source condition managing means (13) for managing both power source information representing a present power on-off condition of a power source and power source change information including latest power on-off date/time, and a notifying means (8) for sending the power source change information to a transmitting apparatus (500).

Thus, it becomes possible to realize the download broadcasting capable of effectively utilizing the bandwidth.

Regarding the information returned from the receiving apparatus to the transmitting apparatus, it is possible to transmit only the power-off time or the power-on time.

As described in the foregoing description, when the receiving apparatus failed in the downloading, the message is outputted through the display apparatus and the failure is notified to the transmitting apparatus. Thus, the present invention makes it possible to manage the actual result of the downloading.

Furthermore, the present invention allows the viewer to designate the preferable downloading time slot beforehand. Thus, it becomes possible to automatically execute the downloading without disturbing the viewer's watching favorable program.

Furthermore, the present invention allows the viewer to designate the allowable maximum interrupt time for the downloading so that the downloading is allowed only during the designated time. Thus, it becomes possible to prevent the downloading from disturbing the viewer's watching favorable program, thereby suppressing viewer's dissatisfaction and irritation and realizing an automatic downloading.

Furthermore, the present invention allows the viewer to request the enforced downloading of the designated software so that the downloading is automatically and forcibly executed when the final chance for receiving the download broadcasting comes. Thus, it becomes possible to increase the success rate in the downloading within the predetermined download broadcasting duration, thereby improving the sureness of the downloading.

Furthermore, the present invention counts in each time slot of the broadcasting the total number of the receiving apparatuses which actually received the downloading broadcasting. Thus, it becomes possible to effectively utilize the bandwidth by concentrating the schedules into a specific time slot without reducing the sureness of the downloading.

Furthermore, the present invention executes the downloading in the time slot not used by the viewer for watching the programs. Thus, it becomes possible to automatically execute the downloading while the viewer does not know it.

Furthermore, the present invention schedules the downloading so as to be surely received by a large number of deactivated receiving apparatuses. Thus, it becomes possible to automatically execute the downloading while the viewer does not know it.

This invention may be embodied in several forms without departing from the essential characteristics thereof. The present embodiments as described are therefore intended to be only illustrative and not restrictive, since the scope of the invention is defined by the appended claims rather than by the description preceding them.

## Claims

1. A transmitting apparatus (500) comprising:
transmitting means (54) for transmitting judgement information to a receiving apparatus (100), thereby causing said receiving apparatus to judge success/failure in the downloading of software based on said judgement information.

2. A transmitting apparatus (500) according to claim 1, wherein said transmitting means (54) is for transmitting a processing identifier for designating processing executed when the receiving apparatus failed in the downloading of the software.

3. A transmitting apparatus (500) according to claim 2, wherein the processing identifier is a software name.

4. A transmitting apparatus (500) according to any one of claims 1 through 3, wherein said judgement information includes a version number of the software and transmission schedule information including start time and end time of the software.

5. A transmitting apparatus according to any one of claims 1 through 4, wherein said transmitting means (54) is for transmitting a necessary time required for the receiving apparatus to download the software from a download broadcasting.

6. A transmitting apparatus according to any one of claims 1 to 5 wherein said transmitting means (54) is for transmitting final broadcasting date/time of a download broadcasting.

7. A transmitting apparatus (500) in accordance with any one of claims 1 through 6, further comprising:
receiving apparatus managing means (58) for managing both time slot information and receiving apparatus counting information, said receiving apparatus count information including the total number of receiving apparatuses having succeeded/failed in a time slot designated by start date/time and end date/time described in said time slot information; and
schedule determining means (52) for determining a schedule of a download broadcasting with reference to said receiving apparatus count information, so that the download broadcasting can be received by a large number of receiving apparatuses.

8. A transmitting apparatus (500) according to any one of claims 1 through 7, further comprising:
receiving apparatus managing means (59) for managing both time slot information and receiving apparatus counting information, said receiving apparatus count information including the total number of activated or deactivated receiving apparatuses in a time slot designated by start date/time and end date/time described in said time slot information; and
schedule determining means (52) for determining a schedule of a download broadcasting with reference to said receiving apparatus count information, so that the download broadcasting can be received by a large number of receiving apparatuses.

9. A receiving apparatus (100) comprising:
receiving means (1) for receiving judgement information used for judging success/failure in the downloading of software stored in the receiving apparatus (100);
success/failure judging means (3) for judging whether the receiving apparatus (100) succeeded or failed in the downloading of software with reference to the judgement information received by said receiving means (1); and
notifying means (7) for notifying downloading success/failure to the outside of the receiving apparatus.

10. A receiving apparatus (100) comprising:
receiving means (1) for receiving judgement information used for judging success/failure in the downloading of software stored in the receiving apparatus (100) and for receiving a processing identifier designating processing executed when the receiving apparatus (100) failed in the downloading of the software;
success/failure judging means (3) for judging whether the receiving apparatus (100) succeeded or failed in the downloading of the software with reference to the judgement information received by said receiving means (1); and
processing executing means (4) for executing designated processing corresponding to said processing identifier when the downloading failure is detected by said success/failure judging means (3).

11. A receiving apparatus (100) according to claim 9 or 10, wherein said judgement information includes a version number of the software and transmission schedule information including start time and end time of the software.

12. A receiving apparatus (100) comprising:
time slot information managing means (9) for managing time slot information including start date/time and end date/time;
schedule judging means (10) for judging whether there is any download broadcasting having broadcasting schedule meeting the time slot managed by said time slot information managing means (9); and
download executing means (4) for executing the downloading of software from the download broadcasting when said schedule judging means (10) confirms the presence of a satisfactory download broadcasting.

13. A receiving apparatus (100) according to claim 12, further comprising
notifying means (7) for notifying downloading success/failure to the outside of the receiving apparatus when said schedule judging means (10) confirms the absence of any satisfactory download broadcasting.

14. A receiving apparatus (100) comprising:
maximum interrupt time managing means (9) for managing a maximum interrupt time for downloading software which represents an allowable maximum interruption of program viewing;
schedule judging means (10) for judging whether there is any download broadcasting having a necessary download time equal to or smaller than said maximum interrupt time managed by said maximum interrupt time managing means (9); and
download executing means (4) for executing the downloading of the software from the download broadcasting when said schedule judging means (10) confirms the presence of a satisfactory download broadcasting.

15. A receiving apparatus (100) according to claim 14, further comprising
notifying means (7) for notifying downloading success/failure to the outside of the receiving apparatus when said schedule judging means (10) confirms the absence of any satisfactory download broadcasting.

16. A receiving apparatus (100) comprising:
final broadcasting date/time flag managing means (9) for managing a final broadcasting date/time flag, said final broadcasting date/time flag indicating decision of enforced downloading which forcibly downloads software from a download broadcasting without missing the chance for receiving said download broadcasting;
final broadcasting date/time judging means (10) for judging whether said final broadcasting date/time flag indicates the execution of the enforced downloading and whether the final chance for receiving said download broadcasting comes; and
download executing means (4) for executing the downloading of the software from the download broadcasting when said final broadcasting date/time judging means (10) confirms that said final broadcasting date/time flag indicates the execution of the enforced downloading and the present download broadcasting is the final chance for downloading the software.

17. The receiving apparatus (100) in accordance with claim 18, further comprising
notifying means (7) for notifying downloading success/failure to the outside of the receiving apparatus when said download executing means (4) failed in downloading the software in the final chance for receiving the download broadcasting.

18. A receiving apparatus (100) comprising:
enforced download flag managing means (9) for managing an enforced downloading flag, said enforced downloading flag indicating forcible execution of downloading of software from a download broadcasting;
enforced download judging means (10) for judging whether said enforced downloading flag indicates the forcible execution of the software downloading from the download broadcasting; and
download executing means (4) for executing the downloading of the software from the download broadcasting when said enforced download judging means (10) confirms that said enforced downloading flag indicates the forcible execution of the software downloading from the download broadcasting.

19. A receiving apparatus (100) comprising:
executed download recording/managing means (11) for recording and managing executed download information including date/time of success/failure in a downloading; and
notifying means (7) for notifying said executed download information to the outside of the receiving apparatus.

20. A receiving apparatus (100) according to any one of claims 9, 11 when dependent on 9, 13, 15, 17 or 19, wherein said notifying means (7) is for causing a display means (200) to display information indicating the success/failure in the downloading.

21. A receiving apparatus (100) according to any one of claims 9, 11 when dependent on 9, 13 15, 17, 19 or 20, wherein said notifying means (7) is for sending download success/failure information to a transmitting apparatus (500), said download success/failure information including a software name relating to the success/failure in the downloading.

22. A receiving apparatus (100) according to any one of claims 9, 11 when dependent on 9, 13, 15, 17, 19, 20 or 21, wherein said notifying means (7) is for sending download success/failure information to a transmitting apparatus (500), said download success/failure information including a receiving apparatus identifier.

23. A receiving apparatus (100) comprising:
viewing condition managing means (12) for managing user's viewing information represented by activation or deactivation of the receiving apparatus;
viewing condition judging means (4) for checking whether the receiving apparatus is an activated condition or in a deactivated condition based on said user's viewing information managed by said viewing condition managing means (12); and
download executing means (4) for executing a downloading of software only when said viewing condition judging means confirms that the receiving apparatus is in the deactivated condition.

24. A receiving apparatus (100) comprising:
viewing condition managing means (12) for managing user's viewing information represented by activation or deactivation of the receiving apparatus;
download schedule judging means (4) for checking whether any download broadcasting is present; and
download executing means (4) for executing a downloading of software only when the receiving apparatus is in a deactivated condition and the downloading broadcasting is present.

25. A receiving apparatus (100) comprising:
power source condition managing means (13) for managing both power source information representing a present power on-off condition of a power source and power source change information including latest power on-off date/time; and
notifying means (8) for sending said power source change information to a transmitting apparatus (500).
